# EUROPÄISCHE PATENTSCHRIFT

(11) **EP 3 198 567 B1**
(45) Veröffentlichungstag und Bekanntmachung des Hinweises auf die Patenterteilung: **25.12.2019**
(21) Anmeldenummer: 15759806.1
(22) Anmeldetag: 07.09.2015
(51) Int. Cl.: G07C 9/00

(54) **DATEN- UND MESSERFASSUNGSVORRICHTUNG FÜR EINEN TÜRGRIFF SOWIE VERFAHREN DAZU**
DATA AND MEASUREMENT ACQUISITION DEVICE FOR A DOOR HANDLE AND CORRESPONDING METHOD
DISPOSITIF D'ACQUISITION DE MESURES ET DE DONNÉES ET PROCÉDÉ CORRESPONDANT

(30) Priorität: 24.09.2014 DE 102014113832
(43) Veröffentlichungstag der Anmeldung: 02.08.2017
(73) Patentinhaber: Huf Hülsbeck & Fürst GmbH & Co. KG, 42551 Velbert (DE)
(72) Erfinder: SCHINDLER, Mirko, 42549 Velbert (DE); GERDES, Bernd, 45355 Essen (DE); RAULIN, Sebastian, 45147 Essen (DE)
(74) Vertreter: Bals, Rüdiger
(86) Internationale Anmeldenummer: PCT/EP2015/070386
(87) Internationale Veröffentlichungsnummer: WO 2016/045952

(56) Entgegenhaltungen:
- DE-A1-102013 102 701
- FR-A1- 2 915 331
- US-A1- 2008 100 522
- US-A1- 2009 256 677
- US-A1- 2014 015 597

## Beschreibung

Die Erfindung betrifft eine Vorrichtung zur Daten- und Messerfassung für einen Türgriff eines Fahrzeugs gemäß dem Oberbegriff des Anspruchs 1. Ferner bezieht sich die Erfindung auf ein Verfahren zum Betreiben einer Vorrichtung zur Daten- und Messerfassung gemäß dem Oberbegriff des Anspruchs 8.

Aus dem Stand der Technik ist es bekannt, Kommunikationsvorrichtungen, wie NFC-Vorrichtungen, sowie Sensorvorrichtungen gemeinsam im Bereich des Türgriffs eines Fahrzeuges, insbesondere Kraftfahrzeuges, einzusetzen. Als Sensoren kommen dabei oft kapazitive Sensoren zum Einsatz, welche als Näherungssensoren eine Annäherung eines Objektes, wie bspw. einer Hand, durch die Messung einer Kapazitätsänderung detektieren können. Bei einer entsprechenden Detektion wird eine Funktion des Fahrzeugs, bspw. eine Berechtigungsanfrage zur Authentifizierung mit einem elektronischen Schlüssel bspw. Identifikationsgeber (ID-Geber), eingeleitet. Ein Problem stellen dabei Störeinflüsse dar, welche eine Fehlauslösung des Sensors verursachen. Dabei kann eine häufige fehlerhafte Aktivierung des Sensors bspw. eine entsprechend häufige Auslösung der Berechtigungsanfrage zur Folge haben und damit zu einem hohen Stromverbrauch bzw. einer Entladung der Fahrzeugbatterie führen. Derartige Fehlauslösungen können durch äußere Einflüsse (wie z. B. Regen im Bereich des Türgriffs), welche eine Kapazitätsänderung bewirken, verursacht werden. Diese Kapazitätsänderung wird dann fälschlicherweise als Annäherung eines Objekts erkannt. Eine weitere wichtige Ursache für Fehlauslösungen stellen Schwankungen der Versorgungsspannung des Sensors dar. Aus diesem Grund ist es erforderlich, dass der Sensor mit einer eigenen Spannungsvorrichtung zur Spannungseinstellung (Spannungsregelung) betrieben wird. Problematisch sind insbesondere Kommunikationsvorrichtungen wie NFC-Vorrichtungen, welche im Betrieb eine sehr hohe elektrische Leistung benötigen, wodurch besonders relevante Störungen der Kapazitätsmessungen des Näherungssensors verursacht werden können. Durch eine eigene separate Spannungsvorrichtung zur Spannungseinstellung (Spannungsregelung) für die jeweiligen einzelnen Geräte, wie die Sensorvorrichtung und die NFC-Vorrichtung, kann eine möglichst konstante Betriebsspannung für den Sensor gewährleistet werden.

Es hat sich dabei als nachteilig herausgestellt, dass bekannte Vorrichtungen zur Daten- und Messerfassung aufgrund der notwendigen separaten Spannungseinstellung, insbesondere durch zumindest zwei verschiedene Spannungsvorrichtungen, einen höheren Platzaufwand aufweisen, kostenaufwändiger in der Herstellung sind und zudem einen höheren Wartungsaufwand haben.

Aus der US 2008/100522 A1, US 2014/015597 A1, FR 2 915 331 A1 und DE 10 2013 102701 A1 sind gattungsgemäße Vorrichtungen bzw. Verfahren bekannt.

Es ist daher die Aufgabe der vorliegenden Erfindung, die voranstehend beschriebenen Nachteile zumindest teilweise zu beheben. Insbesondere ist es Aufgabe der vorliegenden Erfindung, einen zuverlässigen und gleichzeitig kostengünstigen Aufbau einer Vorrichtung zur Daten- und Messerfassung zu ermöglichen.

Die voranstehende Aufgabe wird gelöst durch eine Vorrichtung mit den Merkmalen des Anspruchs 1, einem Verfahren mit den Merkmalen des Anspruchs 8, einen Türgriff mit einer erfindungsgemäßen Vorrichtung zur Daten- und Messerfassung sowie einem Fahrzeug mit zumindest einem erfindungsgemäßen Türgriff und einer erfindungsgemäßen Vorrichtung zur Daten- und Messerfassung. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Verfahren, dem erfindungsgemäßen Türgriff sowie dem erfindungsgemäßen Fahrzeug, und jeweils umgekehrt, so dass bezüglich der Offenbarung zu den einzelnen Erfindungsaspekten stets wechselseitig Bezug genommen wird bzw. werden kann.

Die erfindungsgemäße Vorrichtung dient einer Daten- und Messerfassung für einen Türgriff eines Fahrzeugs, insbesondere eines Kraftfahrzeugs, mit zumindest einer Kommunikationsvorrichtung, insbesondere einer NFC-Vorrichtung zum NFC-Datenaustausch mit einem externen Kommunikationsgerät, und zumindest einer Sensorvorrichtung, insbesondere zur Messung einer Kapazitätsänderung. Dabei ist genau eine, insbesondere ausschließlich eine, Spannungsvorrichtung zur gemeinsamen Spannungseinstellung der zumindest einen Kommunikationsvorrichtung, insbesondere NFC-Vorrichtung, und der zumindest einen Sensorvorrichtung vorgesehen. Merkmale, die im Folgenden im Zusammenhang mit der NFC-Vorrichtung beschrieben sind, gelten dabei selbstverständlich auch im Zusammenhang mit der Kommunikationsvorrichtung. Dabei kann die Kommunikationsvorrichtung zum Datenaustausch mit einem externen Kommunikationsgerät bspw. auch eine Standard Bluetooth-Schnittstelle, eine Mobilfunk-Schnittstelle, eine WLAN-Schnittstelle und/oder dergleichen anstelle der NFC-Vorrichtung aufweisen.

Die zuvor beschriebene Spannungsvorrichtung weist zur gemeinsamen Spannungseinstellung einen Spannungsregler und/oder einen Spannungsstabilisator auf oder ist als Spannungsregler und/oder als Spannungsstabilisator ausgebildet. Die Spannungseinstellung beschreibt daher insbesondere eine Spannungsregelung und/oder eine Spannungsstabilisierung der Betriebsspannung der NFC-Vorrichtung bzw. der Sensorvorrichtung. Dazu kann die Spannungsvorrichtung mit einer Versorgungsspannung, z. B. im Bereich von 5 V bis 27 V und/oder 4 V bis 10 V, betrieben werden und/oder diese Versorgungsspannung als Eingangssignal aufweisen. Die Versorgungsspannung ist insbesondere dann durch die Spannungsvorrichtung gemäß einer vorgegebenen Betriebsspannungshöhe anpassbar bzw. einstellbar. Die vorgegebene Betriebsspannungshöhe richtet sich insbesondere danach, mit welcher Betriebsspannung noch ein zuverlässiger Betrieb der NFC-Vorrichtung und/oder der Sensorvorrichtung möglich ist. Eine ideale Betriebsspannung für die NFC-Vorrichtung kann bspw. im Wesentlichen 3,3 V und für die Sensorvorrichtung im Wesentlichen 2,5 V sein. Es ist jedoch denkbar, dass Abweichungen von dieser idealen Betriebsspannung tolerierbar sind, z. B. im Bereich von +/-1 V, +/-2 V und/oder maximal +/-3 V. Die NFC-Vorrichtung und/oder der Sensorvorrichtung sind dann konstruktiv derart angepasst, dass in diesen Bereich noch ein zuverlässiger Betrieb möglich ist. Aus diesem Grund kann eine gemeinsame Spannungseinstellung durch genau eine Spannungsvorrichtung dadurch ermöglicht werden, dass sowohl die NFC-Vorrichtung als auch die Sensorvorrichtung beide mit einer gleichen, definierten Betriebsspannung von z. B. im Wesentlichen 3,3 V betrieben werden. Dies hat den Vorteil, dass genau eine, insbesondere ausschließlich eine gemeinsame Spannungsvorrichtung (d. h. z. B. ein Spannungsregler) zum Betrieb sowohl der NFC-Vorrichtung als auch der Sensorvorrichtung notwendig ist und damit die Kosten sowie der Bauraum für eine zweite Spannungsvorrichtung eingespart werden können.

Außerdem ist es erfindungsgemäß vorgesehen, dass die Vorrichtung eine Auswerte- und Steuervorrichtung aufweist, die dazu ausgebildet ist, einen zumindest teilweise gleichzeitigen Betrieb zum Zeitpunkt t1 der Kommunikationsvorrichtung und der Sensorvorrichtung messtechnisch zu erfassen, um dann den zum Zeitpunkt t1 erfassten Messwert der Sensorvorrichtung durch die Auswerte- und Steuervorrichtung als fehlerhaft zu kennzeichnen.

Es ist dabei denkbar, dass die Spannungsvorrichtung als elektrischer Spannungsregler ausgebildet sein kann. Die Spannungsvorrichtung kann z. B. ein linearer Regler, wie ein Querregler und/oder ein Längsregler, sein und zur Spannungseinstellung elektrische Bauelemente, wie z. B. eine Zenerdiode aufweisen. Ferner kann die Spannungsvorrichtung auch als Low-Drop-Spannungsregler ausgebildet sein, wobei hier z. B. eine in der Spannungsvorrichtung integrierte MOSFET Verwendung findet. Ein Low-Drop-Spannungsregler ist dabei als Längsregler derart ausgebildet, dass eine verringerte minimal erforderliche Differenz zwischen Ein- und Ausgangsspannung erforderlich ist. Diese Eigenschaft wird z. B. durch den Einsatz eines pnp-Transistors in einem Längszweig der Spannungsvorrichtung erreicht. Dabei kann es möglich sein, dass die Spannungsvorrichtung mit einer Eingangsspannung von z. B. 5 bis 27 V betrieben wird und eine Spannung von im Wesentlichen 3,3 V ausgibt. Durch die Spannungsvorrichtung kann es z. B. ermöglicht werden, dass die Ausgangsspannung eine Abweichung von weniger als 1 %, 2 %, 4 % und/oder 5 % von dem Sollwert (z. B. die 3,3 V) aufweist. Auch kann es möglich sein, dass die Ausgangsspannung eine zweifach, dreifach und/oder vierfach geringere Abweichung vom Sollwert aufweist als die Eingangsspannung. Hierdurch wird der Vorteil erzielt, dass durch die Nutzung der Spannungsvorrichtung ein sicherer Betrieb der NFC-Vorrichtung und/oder der Sensorvorrichtung möglich ist, als bei einer direkten Energieversorgung mit der Versorgungsspannung. Hierzu kann die Spannungsvorrichtung direkt mit der NFC-Vorrichtung und/oder der Sensorvorrichtung verbunden sein, d. h. dass keine weitere Spannungseinstellung für die NFC-Vorrichtung bzw. die Sensorvorrichtung nach der Spannungsvorrichtung erfolgt.

Ferner kann es möglich sein, dass die Sensorvorrichtung ausschließlich für eine Kapazitätsmessung einsetzbar ist, bzw. durch die Sensorvorrichtung und/oder durch Sensoreinheiten der Sensorvorrichtung ausschließlich eine Messung einer Kapazitätsänderung durchführbar ist. Die Sensorvorrichtung weist z. B. ausschließlich Sensoren zur Kapazitätsmessung auf, wodurch ein vereinfachter Aufbau der Sensorvorrichtung möglich ist. Weiter kann vorgesehen sein, dass die Sensorvorrichtung Näherungssensoren aufweist, um eine Annäherung eines Objektes, wie bspw. einer Hand, insbesondere durch die Messung einer Kapazitätsänderung zu detektieren. Zur Kapazitätsmessung kann die Sensorvorrichtung bspw. eine Schaltung aufweisen, durch welche mittels einer Frequenzmessung, einer Impedanzmessung, einer Ladezeitmessung und/oder einem (Kondensator-)Umladeverfahren eine Kapazitätsdifferenz an Sensorelektroden der Sensoreinheiten bzw. der Sensorvorrichtung gemessen werden kann. Die Sensorelektroden bzw. Sensoreinheiten bilden dabei einen Kondensator, dessen Kapazität durch ein sich annäherndes Objekt veränderbar ist. Bei einer Detektion einer Kapazitätsänderung kann damit also eine Annäherung eines Objektes erfasst werden. Zur Messung der Kapazitätsänderung erfolgt bspw. gemäß dem Umladeverfahren eine getaktete Entladung eines Referenzkondensators auf eine Referenzspannung, z. B. durch Umladung auf die Sensorelektrode. Der Referenzkondensator kann dabei parallel zu der zu messenden Kapazität, also der Sensorelektrode, geschaltet sein. Weiter kann eine Auswerte- und Steuervorrichtung vorgesehen sein, welche z. B. zumindest einen Komparator und zumindest einen Taktgenerator aufweist. Hierdurch kann eine Anzahl von Umladevorgängen, d. h. der zur Entladung notwendigen Takte und/oder Entladeimpulse, welche benötigt wird, um die Referenzspannung zu erreichen, gemessen werden. Diese Anzahl und/oder die Zeit, die zur Entladung benötigt wird, ist dabei ein Maß für die zu messende Kapazität. Hierdurch wird eine einfache und effiziente Kapazitätsmessung ermöglicht.

Bevorzugt kann bei der erfindungsgemäßen Vorrichtung die Sensorvorrichtung gemeinsam mit der NFC-Vorrichtung im/am Türgriff angeordnet sein. Da durch die Sensorvorrichtung die Annäherung eines Objektes, insbesondere eines Bedieners bzw. der Hand eines Bedieners an das Fahrzeug, detektiert werden kann, um z. B. einen Authentifizierungsvorgang auszulösen, ist eine Anordnung der Sensorvorrichtung in unmittelbarer Nähe zur NFC-Vorrichtung besonders vorteilhaft. Die NFC-Vorrichtung ist dabei ein Kommunikationsmittel nach einem NFC-Standard (Near Field Communication). Die NFC-Technologie ist eine kontaktlose, induktive Verbindungstechnologie. Sie arbeitet in einem Frequenzbereich von 13,56 MHz und bietet eine Datenübertragungsrate von maximal 424 kBit pro Sekunde bei einer Reichweite von bis zu 10 cm. Die NFC-Technologie ist insbesondere kompatibel mit Smartcard-Systemen bzw. Smartcard-Infrastrukturen, z. B. basierend auf ISO/IEC 14443A (z. B. NXP's Mifare Technologie), wie auch mit Sony's FeliCa-Card, welche für elektronische Fahrkarten im öffentlichen Nahverkehr und für Zahlungsanwendungen genutzt wird. Dabei kann die NFC-Vorrichtung mittels des NFC-Datenaustauschs z. B. direkt zur Authentifizierung des Bedieners genutzt werden, indem bspw. ein Code von dem externen Kommunikationsgerät über den NFC-Datenaustausch an das Fahrzeug übertragen wird. Neben einer Berechtigungsabfrage über den NFC-Datenaustausch ist bspw. auch ein Austausch von fahrzeugseitigen Parametern denkbar, wie im Folgenden noch näher erläutert wird. Das Kommunikationsgerät kann dabei bspw. ein ID-Geber, ein Handy, ein Tablet(-Computer), eine Geldkarte und/oder eine Smartcard etc. sein, welche ein Bediener üblicherweise mit sich trägt. Daher ist eine Anordnung am Türgriff bzw. in der Nähe der Sensorvorrichtung sinnvoll, um die Distanz zum Bediener bzw. zum Kommunikationsgerät zu verringern. Bspw. könnte dabei eine Abfrage der NFC-Vorrichtung auch durch eine Detektion einer Annäherung durch die Sensorvorrichtung initiiert werden.

Vorteilhafterweise kann im Rahmen der Erfindung vorgesehen sein, dass die Sensorvorrichtung eine Auswerte- und Steuervorrichtung und zumindest eine Sensoreinheit, insbesondere einen kapazitiven Sensor, aufweist, wobei vorzugsweise durch die Auswerte- und Steuervorrichtung sowohl eine Ansteuerung der NFC-Vorrichtung als auch der zumindest einen Sensoreinheit durchführbar ist. Die Auswerte- und Steuervorrichtung kann insbesondere als ein monolithischer Schaltkreis, insbesondere als integrierter Schaltkreis bzw. Mikrocontroller, ausgebildet sein, und z. B. in SMD (surface-mounted device) Bauweise auf eine Platine der erfindungsgemäßen Vorrichtung integriert sein. Ferner kann die Auswerte- und Steuervorrichtung die Spannungsvorrichtung aufweisen bzw. mit der Spannungsvorrichtung einen monolithischen Schaltkreis bilden. Die Sensoreinheit kann z. B. zur Kapazitätsmessung einen Messkondensator dadurch bilden, dass sie einen Draht und/oder zumindest eine elektrisch leitfähige Elektrode aufweist, wobei durch die Annäherung eines Objekts an die zumindest eine Elektrode eine Kapazitätsänderung der Sensoreinheit hervorgerufen wird. Die Kapazitätsänderung wird bspw. durch die Auswerte- und Steuervorrichtung, insbesondere mittels des Umladeverfahrens, ermittelt, wobei hierzu - wie bereits beschrieben wurde - die Takte bis zum Erreichen einer Referenzspannung aufsummiert werden. Für diese Messwerterfassung, also die Ermittlung der Kapazitätsänderung, kann die Auswerte- und Steuervorrichtung elektrisch mit der Sensoreinheit, z. B. über zumindest ein Kabel und/oder einen Draht und/oder per Funk, verbunden sein. Grundsätzlich ist bei der Messung der Sensorvorrichtung, also der Ermittlung der Kapazitätsänderung der Sensoreinheiten, eine möglichst konstante und stabile Betriebsspannung notwendig, damit ein Erreichen einer Referenzspannung zuverlässig auf eine Kapazitätsänderung zurückzuführen ist. Eine Spannungsschwankung, welche bspw. durch einen Betrieb, d. h. eine Abfrage und/oder einen Datenaustausch, der NFC-Vorrichtung hervorgerufen wird, kann sich auf die Betriebsspannung der Sensorvorrichtung auswirken. Durch die Spannungsschwankung erfolgt dann eine Fehlauslösung der Sensorvorrichtung, da die Referenzspannung auch ohne eine tatsächliche Kapazitätsänderung erreicht werden kann. Da die NFC-Vorrichtung und die Sensorvorrichtung mit ausschließlich bzw. genau einer gemeinsamen Spannungsvorrichtung zur gemeinsamen Spannungseinstellung verbunden sind, ist der Einfluss einer Spannungsschwankung durch die NFC-Vorrichtung besonders relevant. Um eine solche Fehlauslösung zu vermeiden, wird daher insbesondere ein gleichzeitiger Betrieb der NFC-Vorrichtung und der Sensorvorrichtung bzw. der Sensoreinheiten durch die Auswerte- und Steuervorrichtung verhindert und/oder blockiert. Dabei kann die Auswerte- und Steuervorrichtung z. B. sowohl zur Ansteuerung und/oder Auswertung der NFC-Vorrichtung als auch der Sensorvorrichtung (d. h. zumindest einer Sensoreinheit) dienen und/oder ausschließlich nur zur Ansteuerung und/oder Auswertung der Sensorvorrichtung genutzt werden. Gemäß der letzteren Alternative kann vorgesehen sein, dass die NFC-Vorrichtung eine eigene Auswertevorrichtung aufweist, welche die Daten des NFC-Datenaustauschs verarbeitet. Die Auswerte- und Steuervorrichtung weist also z. B. entweder ausschließlich Funktionen zur Kapazitätsmessung mit der Sensorvorrichtung auf, und kann vorzugsweise auch Funktionen für einen NFC-Datenaustausch bzw. der entsprechenden Datenauswertung übernehmen. Grundsätzlich kann die Auswerte- und Steuervorrichtung geeignet sein, eine Ansteuerung und/oder einen Betrieb der Sensorvorrichtung durchzuführen, insbesondere dadurch, dass die Auswerte- und Steuervorrichtung zumindest eine und/oder sämtliche Sensoreinheiten der Sensorvorrichtung (elektrisch) ansteuert. Hierdurch wird der Vorteil erzielt, dass die Auswerte- und Steuervorrichtung eine zuverlässige und effiziente Daten- und Messerfassung bewirkt.

Die Ausdrücke "Betrieb der Sensorvorrichtung" bzw. "Messung der Sensorvorrichtung" beziehen sich dabei z. B. auf eine Messung, eine Messwerterfassung und/oder Auswertung der Kapazitätsmessung und/oder Ansteuerung, Aktivierung und/oder Energieversorgung der Sensorvorrichtung bzw. Sensoreinheiten durch die Auswerte- und Steuervorrichtung. Der Ausdruck "Betrieb der NFC-Vorrichtung" bezieht sich dabei vorzugsweise auch auf eine Abfrage, Auswertung, Generierung und/oder Verwertung von Daten des NFC-Datenaustausches und/oder eine Ansteuerung, Aktivierung und/oder Energieversorgung der NFC-Vorrichtung. Bei einem Betrieb der NFC-Vorrichtung wird zudem bspw. ein Polling zur Aussendung eines Abfrageimpulses (zum Erkennen eines kommunikationsbereiten Kommunikationsgerätes), ein Datenaustausch mit dem Kommunikationsgerät und/oder eine Auswertung und Generierung von Daten zum Datenaustausch durchgeführt. Mit dem Begriff "Ansteuerung" kann sowohl die Auswertung, der Betrieb, die Messung, die Strom- bzw. Spannungsversorgung und/oder Datenkommunikation gemeint sein.

In einer weiteren Möglichkeit kann vorgesehen sein, dass die Auswerte- und Steuervorrichtung elektrisch mit der NFC-Vorrichtung und/oder zumindest einer Sensoreinheit der Sensorvorrichtung verbunden ist, um so eine Erfassung von Eingangssignalen und/oder Ausgangssignalen durchzuführen, und insbesondere durch die NFC-Vorrichtung verursachte Störungen der Messung dadurch reduzierbar sind, dass durch die Auswerte- und Steuervorrichtung die erfassten Eingangssignale und/oder Ausgangssignale überwacht werden. Die Auswerte- und Steuervorrichtung kann entsprechend dazu eingesetzt werden, eine durch den Betrieb der NFC-Vorrichtung entstehende Spannungsschwankung zu erkennen. Diese Spannungsschwankung verursacht z. B. eine ungültige Messung der Sensorvorrichtung, insbesondere eine fehlerhafte Kapazitätsänderung und/oder eine Falschauslösung einer Sensoreinheit der Sensorvorrichtung. Dabei kann es möglich sein, dass die Spannungsschwankung direkt durch die Auswertung der Eingangssignale und/oder Ausgangssignale durch die Auswerte- und Steuervorrichtung erkannt wird, z. B. bei einem Überschreiten definierter Grenzwerte. Auch ist es denkbar, dass generell ein gleichzeitiger Betrieb bzw. eine gleichzeitige Auswertung der NFC-Vorrichtung und der Sensorvorrichtung dadurch vermieden wird, dass die Eingangssignale und/oder Ausgangssignale überwacht werden und die NFC-Vorrichtung und die Sensorvorrichtung insbesondere in Abhängigkeit der Eingangs- und/oder Ausgangssignale angesteuert werden. Die Auswerte- und Steuervorrichtung steuert also insbesondere, dass bei einem Betrieb der NFC-Vorrichtung ein gleichzeitiger Betrieb der Sensorvorrichtung (d. h. der Messung der Kapazitätsänderungen durch die Sensoreinheiten) eingestellt bzw. blockiert wird. Insbesondere wird die Auswerte- und Steuervorrichtung der Sensorvorrichtung stets, d. h. ununterbrochen, weiter betrieben, da sie die entsprechende Ansteuerung der Sensorvorrichtung übernehmen muss. Damit können effektiv Störungen der Messung verhindert bzw. reduziert werden.

Ferner kann bei der erfindungsgemäßen Vorrichtung vorgesehen sein, dass die gemeinsame Spannungseinstellung der NFC-Vorrichtung und der Sensorvorrichtung, insbesondere einer Auswerte- und Steuervorrichtung und/oder einer Sensoreinheit der Sensorvorrichtung, direkt durch die Spannungsvorrichtung durchführbar ist, wobei insbesondere die Auswerte- und Steuervorrichtung zur Energieversorgung der zumindest einen Sensoreinheit mit der zumindest einen Sensoreinheit elektrisch verbunden ist. Dabei kann es denkbar sein, dass zur direkten Spannungseinstellung die NFC-Vorrichtung und/oder die Sensorvorrichtung direkt elektrisch mit der Spannungsvorrichtung verbunden sind. Ebenfalls kann es möglich sein, dass die Spannungseinstellung und Energieversorgung der NFC-Vorrichtung und der Auswerte- und Steuervorrichtung direkt, d. h. unmittelbar, durch die Spannungsvorrichtung und die Energieversorgung der Sensoreinheiten direkt bzw. unmittelbar durch die Auswerte- und Steuervorrichtung erfolgt. Auch im vorgenannten Fall erfolgt die Spannungseinstellung der Sensoreinheiten der Sensorvorrichtung direkt durch die Spannungsvorrichtung, da die Spannungseinheiten direkt von der Spannungseinstellung der Auswerte- und Steuervorrichtung durch die Spannungsvorrichtung betroffen ist. Die Energieversorgung der Sensoreinheiten wird also direkt durch die Spannungseinstellung der Spannungsvorrichtung und nicht etwa noch durch weitere Spannungsvorrichtungen beeinflusst. Dies hat den Vorteil, dass sowohl die Auswerte- und Steuervorrichtung als auch die Sensoreinheiten eine gemeinsame Spannungseinstellung aufweisen können.

Vorteilhafterweise kann im Rahmen der Erfindung vorgesehen sein, dass ein zumindest teilweise gleichzeitiger Betrieb zum Zeitpunkt (t1) der NFC-Vorrichtung und der Sensorvorrichtung durch eine Auswerte- und Steuervorrichtung messtechnisch erfassbar ist, wobei dann insbesondere der zum Zeitpunkt (t1) erfasste Messwert der Sensorvorrichtung durch die Auswerte- und Steuervorrichtung als fehlerhaft kennzeichenbar ist. Teilweise bezeichnet insbesondere einen Betrieb, welcher sich zeitlich teilweise überlappt, so dass hierdurch Störungen der Messung der Sensorvorrichtung verursacht werden könnten. Hierdurch wird der Vorteil erreicht, dass die Verwendung einer fehlerhaften Messung, verursacht durch eine Spannungsschwankung, von vornherein ausgeschlossen wird. Es wird also generell vermieden, bei einem gleichzeitigen Betrieb eine gleichzeitige Messauswertung durchzuführen. "Gleichzeitiger Betrieb" bezieht sich hier also insbesondere darauf, dass bei einer Abfrage und/oder einem Datenaustausch der NFC-Vorrichtung gleichzeitig eine Messung einer Kapazitätsänderung durch die Sensorvorrichtung erfolgt. Die Messung wird dann zwar gleichzeitig durchgeführt, der gemessene Wert jedoch z. B. gekennzeichnet und/oder verworfen. Die Kennzeichnung kann bspw. ein Flag sein, welcher als binäre Variable bzw. mit einem bestimmten binären Code dem Messwert zugeordnet wird und den Messwert kennzeichnet. Dieser Flag wird bspw. mit dem Messwert in einer nicht flüchtigen Speichereinheit der erfindungsgemäßen Vorrichtung hinterlegt. Ebenfalls kann es möglich sein, dass die Auswerte- und Steuervorrichtung Spannungsschwankungen, welche definitiv eine fehlerhafte Messung verursachen, erkennt und z. B. ausschließlich dann den erfassten fehlerhaften Messwert entsprechend kennzeichnet.

Ein weiterer Vorteil kann im Rahmen der Erfindung erzielt werden, wenn die Auswerte- und Steuervorrichtung eine Datenverbindung, insbesondere eine SPI-Verbindung, zur NFC-Vorrichtung und/oder zu zumindest einer Sensoreinheit und/oder zur Fahrzeugelektronik aufweist, wobei insbesondere über die Datenverbindung Daten zur Ansteuerung und/oder Auswertung übertragbar sind. Eine SPI-Verbindung (Serial Peripheral Interface) ist dabei eine Datenverbindung über ein Bus-System nach dem SPI-Standard. Dabei kann es sich um einen seriellen Daten-Bus handeln, wobei die erfindungsgemäße Vorrichtung bzw. die Auswerte- und Steuervorrichtung insbesondere als Slave in das Bus-System des Fahrzeugs eingebunden wird. Für diesen Zweck kann das Fahrzeug einen entsprechenden Master-SPI-Controller aufweisen. Dieser Controller kann bspw. in einer Fahrzeugelektronik des Fahrzeugs integriert sein, wobei die Auswerte- und Steuervorrichtung über die Datenverbindung mit der Fahrzeugelektronik verbunden ist. Die NFC-Vorrichtung kann dabei entweder direkt mit der Fahrzeugelektronik und/oder zum Datenaustausch mit der Auswerte- und Steuervorrichtung verbunden sein. Die Datenverbindung mit der Auswerte- und Steuervorrichtung hat dabei den Vorteil, dass zunächst Daten der NFC-Vorrichtung durch die Auswerte- und Steuervorrichtung empfangen und ausgewertet werden können und z. B. der Betrieb der NFC-Vorrichtung und/oder der Sensorvorrichtung in Abhängigkeit dieser Daten erfolgt, um z. B. Störungen der Messung der Sensorvorrichtung zu vermeiden. Ebenfalls ist es denkbar, dass die Datenverbindung z. B. einen CAN-Bus (Controller Area Network) oder einen LIN-Bus (Local Interconnect Network) aufweist.

Vorteilhafterweise kann im Rahmen der Erfindung vorgesehen sein, dass durch die Auswerte- und Steuervorrichtung Daten des Datenaustausches der NFC-Vorrichtung empfangbar, auswertbar und/oder an eine mit der Auswerte- und Steuervorrichtung verbindbare Fahrzeugelektronik übertragbar sind, insbesondere zur Durchführung einer Identifikationsprüfung/Authentifizierung, wobei zur Verbindung mit der Fahrzeugelektronik insbesondere eine Schnittstelleneinheit vorgesehen ist. Auf diese Weise kann sowohl die NFC-Vorrichtung als auch die Sensorvorrichtung mit den kapazitiven Sensorelementen zur Erkennung einer Annäherung zur Identifikationsprüfung genutzt werden. Auch ist es denkbar, dass die NFC-Vorrichtung für weitere Funktionen verwendet wird. Dies kann bspw. die Übertragung von Daten über den Datenaustausch sein, welche Informationen über das Fahrzeug und/oder über den Bediener aufweisen. Für die Datenverbindung kann zudem eine Schnittstelleneinheit der Auswerte- und Steuervorrichtung vorgesehen sein, welche geeignet ist, gemäß der Datenverbindung des Datenaustausches (z. B. einer SPI-Verbindung) zu kommunizieren.

In einer weiteren Möglichkeit kann im Rahmen der Erfindung vorgesehen sein, dass eine nicht-flüchtige Speichereinheit vorgesehen ist, wobei die nicht-flüchtige Speichereinheit Daten, und insbesondere Daten mit Informationen über Fahrzeugparameter umfasst, wobei die Daten durch die NFC-Vorrichtung übertragbar und/oder empfangbar sind. Die nicht flüchtige Speichereinheit kann dabei ein ROM-Speicher (read-only memory), ein Flash-Speicher, ein EPROM (erasable programmable read-only memory), EEPROM (electrically erasable programmable read-only memory) und/oder eine Festplatte und/oder dergleichen sein. Die Daten können z. B. Informationen über Fahrzeugparameter und/oder über das Fahrzeug umfassen, welche z. B. die Tankfüllung, den Zustand der Schließvorrichtung, Informationen über geöffnete oder geschlossene Türen und/oder Fenster, eine Parametrisierung der Sensorvorrichtung und/oder NFC-Vorrichtung z. B. zur Wartung, weitere Wartungsparameter, Benutzereinstellungen und/oder bedienerspezifische Daten (wie bspw. die Sitzposition, Fahrerlaubnis u.a. bei Carsharing etc.) aufweisen. Das Kommunikationsgerät bzw. die unterstützten Kommunikationsgeräte können ebenfalls einen Speicher aufweisen, welcher die genannten Daten/Informationen umfasst, und z. B. als Handy, Laptop und/oder Smartphone ausgebildet sein. Dies hat den Vorteil, dass den Kommunikationsgeräten eine umfangreiche und flexible Abfrage von Fahrzeugparametern möglich ist. Ebenfalls können für bestimmte Anwendungen, wie z. B. Carsharing, Bedienereinstellungen, Bedienerangaben und Daten von dem Fahrzeug verwendet und/oder protokolliert werden.

Vorteilhafterweise kann im Rahmen der Verbindung vorgesehen sein, dass durch die Sensorvorrichtung, insbesondere durch zumindest eine Sensoreinheit der Sensorvorrichtung, eine Annäherung eines Objektes, insbesondere in einen Erfassungsbereich des Türgriffs, über eine Kapazitätsänderung der zumindest einen Sensoreinheit detektierbar ist. Der Erfassungsbereich des Türgriffs kann sich dabei bspw. in einer Distanz bis zu 0,5 cm, 1 cm, 2 cm und/oder 3 cm entfernt vom Türgriff erstrecken und/oder im Bereich einer Griffmulde des Türgriffs liegen. Auf diese Weise kann zuverlässig eine Annäherung des Bedieners, welche z. B. zum Öffnen der Tür dient, insbesondere einer Hand des Bedieners, erfasst werden. Zur Steigerung der Zuverlässigkeit kann z. B. auch vorgesehen sein, dass die Sensorvorrichtung zur Messung der Kapazitätsänderung und damit zur Detektion einer Annäherung nicht nur eine Sensoreinheit aufweist, sondern zur Fehlerkompensation eine Vielzahl von Sensoreinheiten, insbesondere zumindest zwei, drei, vier und/oder zumindest zehn Sensoreinheiten aufweist und auswertet.

In einer weiteren Möglichkeit kann vorgesehen sein, dass durch die NFC-Vorrichtung eine Annäherung eines Objektes, insbesondere in einem Nahbereich des Türgriffs, erkennbar ist. Dabei weist der Nahbereich insbesondere eine geringere Entfernung von dem Türgriff auf, als der Erfassungsbereich durch die Sensorvorrichtung bzw. der Sensoreinheit. Da zur Vermeidung von ungültigen Messungen durch eine Störung der Messung der Sensorvorrichtung ein gleichzeitiger Betrieb der NFC-Vorrichtung und der Sensorvorrichtung ggf. verhindert bzw. blockiert wird, kann zu diesen Zeitpunkten die Sensorvorrichtung eine Annäherung nicht erkennen. Diese Detektion einer Annäherung könnte daher, z. B. ausschließlich zu diesen Zeitpunkten, von der NFC-Vorrichtung übernommen werden. Damit ist eine lückenlose Erfassung einer Annäherung durch einen Bediener bzw. ein Objekt möglich.

Vorteilhafterweise kann im Rahmen der Erfindung vorgesehen sein, dass zumindest eine Sensoreinheit der Sensorvorrichtung zumindest ein kapazitives Sensorelement und/oder einen insbesondere elektrisch leitenden Kern aufweist, wobei insbesondere zumindest zwei kapazitive Sensorelemente eine Sensoreinheit bilden können und insbesondere miteinander verbunden sind. Durch einen elektrisch leitenden Kern können dabei die messtechnischen Eigenschaften des kapazitiven Sensorelements der Sensorvorrichtung verbessert und ggf. der Messbereich des Sensorelements erweitert werden.

Ferner ist es denkbar, dass eine Schalteinheit vorgesehen ist, um zur Reduzierung von Störungen der Messung zwischen einem Betrieb der Sensorvorrichtung, d. h. insbesondere zumindest einer Sensoreinheit der Sensorvorrichtung, und der NFC-Vorrichtung umzuschalten, wobei die Schalteinheit insbesondere in der Auswerte- und Steuervorrichtung integrierbar ist. Um Störungen der Messung der Sensorvorrichtung bzw. ungültige (fehlerhafte) Messwerte zu vermeiden, ist es ebenfalls denkbar, dass z. B. bei einem Betrieb der NFC-Vorrichtung die Sensorvorrichtung, d. h. insbesondere die Sensoreinheiten der Sensorvorrichtung (ohne die Auswerte- und Steuervorrichtung) komplett ausgeschaltet werden. Somit ist lediglich ein sequenzieller Betrieb der Sensorvorrichtung und der NFC-Vorrichtung durch die vorgesehene Schalteinheit möglich. Dazu ist eine Schalteinheit, insbesondere eine Umschalteinheit, vorgesehen, welche entweder separat oder in der Auswerte- und Steuervorrichtung integriert sein kann. Für bestimmte Zeitpunkte, z. B. vorgegeben durch einen Zeitgeber der Auswerte- und Steuervorrichtung, kann dabei zwischen einem Betrieb der Sensorvorrichtung und der NFC-Vorrichtung umgeschaltet werden. Auch ist es denkbar, dass hierdurch nicht die NFC-Vorrichtung und die Sensorvorrichtung komplett ausgeschaltet werden, sondern lediglich durch die Schalteinheit die Messerfassung bzw. Datenerfassung aktiviert bzw. deaktiviert wird.

Ebenfalls ist Gegenstand der Erfindung ein Verfahren zum Betreiben einer Vorrichtung zur Daten- und Messerfassung für einen Türgriff eines Fahrzeugs, insbesondere Kraftfahrzeugs. Dabei sind zumindest eine Kommunikationsvorrichtung, insbesondere eine NFC-Vorrichtung zum NFC-Datenaustausch mit einem externen Kommunikationsgerät, und zumindest eine Sensorvorrichtung, insbesondere zur Messung einer Kapazitätsänderung vorgesehen. Weiter ist vorgesehen, dass genau eine, insbesondere ausschließlich eine, Spannungsvorrichtung der gemeinsamen Spannungseinstellung der zumindest einen Kommunikationsvorrichtung, insbesondere NFC-Vorrichtung, und der zumindest einen Sensorvorrichtung dient. Damit bringt das erfindungsgemäße Verfahren die gleichen Vorteile mit sich, wie sie ausführlich mit Bezug auf eine erfindungsgemäße Vorrichtung erläutert worden sind. Zudem kann das erfindungsgemäße Verfahren geeignet sein, die erfindungsgemäße Vorrichtung zu betreiben.

Es ist hierbei vorgesehen, dass die Spannungsvorrichtung zur gemeinsamen Spannungseinstellung einen Spannungsregler und/oder einen Spannungsstabilisator aufweist oder als Spannungsregler und/oder als Spannungsstabilisator ausgebildet ist, wobei ein zumindest teilweise gleichzeitiger Betrieb zum Zeitpunkt t1 der Kommunikationsvorrichtung und der Sensorvorrichtung durch eine Auswerte- und Steuervorrichtung messtechnisch erfasst wird, wobei dann der zum Zeitpunkt t1 erfasste Messwert der Sensorvorrichtung durch die Auswerte- und Steuervorrichtung als fehlerhaft gekennzeichnet wird.

Vorteilhafterweise kann es im Rahmen der Erfindung vorgesehen sein, dass die Ansteuerung durch die Auswerte- und Steuervorrichtung derart erfolgt, dass durch einen Betrieb der NFC-Vorrichtung verursachte Störungen der Messung der Sensorvorrichtung verhindert werden, insbesondere dadurch, dass die Auswerte- und Steuervorrichtung einen gleichzeitigen Betrieb der NFC-Vorrichtung und der Sensorvorrichtung detektiert und/oder blockiert. Ein gleichzeitiger Betrieb kann z. B. dadurch erkannt werden, dass die Auswerte- und Steuervorrichtung elektrisch mit der NFC-Vorrichtung und der Sensorvorrichtung bzw. den einzelnen Sensoreinheiten der Sensorvorrichtung verbunden ist und dabei insbesondere die Eingangs- und/oder Ausgangssignale der NFC-Vorrichtung und/oder der Sensorvorrichtung überwacht. Dabei werden z. B. eine Störung und/oder ein gleichzeitiger Betrieb dadurch erkannt, dass von der Auswerte- und Steuervorrichtung Überschreitungen von Grenzwerten und/oder bestimmte Muster des Spannungsverlaufs der Eingangs- und/oder Ausgangssignale detektiert werden. Ein gleichzeitiger Betrieb kann bspw. dadurch blockiert werden, dass die Auswerte- und Steuervorrichtung eine Datenerfassung und/oder einen Betrieb der NFC-Vorrichtung sowie eine Messung und/oder eine Messwerterfassung der Sensorvorrichtung lediglich sequenziell ansteuert. Insbesondere der Betrieb der NFC-Vorrichtung, d. h. insbesondere das Aussenden von Abfrageimpulsen zur Erkennung eines kommunikationsbereiten Kommunikationsgerätes und der NFC-Datenaustausch mit dem externen Kommunikationsgerät, verbraucht eine sehr hohe elektrische Leistung. Dieser Betrieb der NFC-Vorrichtung wird durch die Auswerte- und Steuervorrichtung entweder stets zu bestimmten festdefinierten Zeitpunkten oder in Abhängigkeit des Betriebs der Sensorvorrichtung bestimmt. Ein Betrieb der Sensorvorrichtung erfolgt dadurch, dass z. B. das Umladeverfahren durchgeführt wird, um eine Kapazitätsänderung, insbesondere der Sensoreinheiten bzw. Sensorelemente festzustellen. Dabei wird eine entsprechende Messgröße, wie die Anzahl der zum Entladen notwendigen Takte, ermittelt und der entsprechende Messwert ausgewertet. Dieser Betrieb der Sensorvorrichtung erfolgt entweder stets zu bestimmten Zeitpunkten und/oder in Abhängigkeit des Betriebs der NFC-Vorrichtung. Durch diesen sequenziellen Betrieb der NFC-Vorrichtung und der Sensorvorrichtung wird eine störungsfreie Messerfassung der Sensorvorrichtung gewährleistet.

Ferner ist es denkbar, dass durch eine Auswerte- und Steuervorrichtung eine Messung der Sensorvorrichtung zyklisch initiiert wird und eine Abfrage der NFC-Vorrichtung in zeitlicher Abhängigkeit der Messung, insbesondere zyklisch nach einer definierten Anzahl Messungen, durchgeführt wird. Dabei kann die Messung der Sensorvorrichtung z. B. zeitlich immer nach einer bestimmten Periodendauer erfolgen, z. B. einer Periodendauer von im Wesentlichen 25 ms, 50 ms, 75 ms und/oder 100 ms. Innerhalb dieser Periodendauer werden z. B. taktgesteuert Ladeimpulse und/oder Entladeimpulse, z. B. mit einer Dauer von im Wesentlichen 2 ms, 3 ms und/oder 5 ms, eingesetzt und/oder entsprechende Takte gezählt, um eine Kapazitätsänderung festzustellen. Die Abfrage der NFC-Vorrichtung erfolgt ggf. ebenfalls in Abständen einer bestimmten Periodendauer, welche z. B. ein Vielfaches (z. B. mindestens das doppelte, vierfache und/oder zehnfache) der ersten Periodendauer beträgt. Nach einer definierten Anzahl von Messungen der Sensorvorrichtung erfolgt also bspw. stets eine Abfrage der NFC-Vorrichtung. Durch diese Abfrage, z. B. durch einen Abfragepuls, kann die NFC-Vorrichtung feststellen, ob sich ein kommunikationsbereites Kommunikationsgerät im Nahbereich der NFC-Vorrichtung befindet. Der Nahbereich bezeichnet dabei den maximalen Sende- und Empfangsbereich der NFC-Vorrichtung. Dies hat den Vorteil, dass ein koordinierter Messablauf auf zuverlässige Weise erfolgen kann.

Vorteilhafterweise kann im Rahmen der Erfindung vorgesehen sein, dass die NFC-Vorrichtung und die Sensorvorrichtung, insbesondere eine Auswerte- und Steuervorrichtung der Sensorvorrichtung, durch die Spannungsvorrichtung mit einer gleichen elektrischen Betriebsspannung betrieben werden und/oder mit einem gleichen elektrischen Potential verbunden sind, wobei insbesondere eine Spannung zum Betrieb einer Sensoreinheit der Sensorvorrichtung unmittelbar und/oder ausschließlich von dieser Betriebsspannung abhängt. Die Betriebsspannung beträgt dabei bspw. 3,3 V, welche ebenfalls für einen zuverlässigen Betrieb der Sensorvorrichtung (und damit auch ggf. der Sensoreinheiten, welche davon abhängig sind, da sie von der Auswerte- und Steuervorrichtung mit Strom versorgt werden) geeignet ist. Dies hat den Vorteil, dass sowohl die Sensorvorrichtung als auch die NFC-Vorrichtung mit einer gleichen Spannung betrieben werden und somit lediglich eine Spannungsvorrichtung vorgesehen werden muss. Dies vereinfacht zudem den Schaltungsaufbau in erheblicher Weise.

Ferner kann es zweckmäßigerweise vorgesehen sein, dass durch die NFC-Vorrichtung eine Abfrage, insbesondere durch Abfragepulse, zyklisch durchgeführt wird, um so ein kommunikationsbereites externes Kommunikationsgerät, insbesondere im Nahbereich des Türgriffs, zu detektieren, wobei eine solche Abfrage der NFC-Vorrichtung stets durch die Auswerte- und Steuervorrichtung messtechnisch (z. B. durch die Überwachung von Eingangs- und/oder Ausgangssignalen der NFC-Vorrichtung) erfasst wird. Da bei einer Annäherung des Bedieners z. B. eine Authentifizierungsabfrage möglichst zeitnah erfolgen sollte, hat das Polling, also die regelmäßige zyklische Abfrage der NFC-Vorrichtung zur Erkennung des kommunikationsbereiten externen Kommunikationsgerät, den Vorteil, dass z. B. ein Authentifizierungsvorgang über die NFC-Vorrichtung rechtzeitig ausgelöst werden kann. Zur Abfrage werden bspw. Abfragesignale (d. h. z. B. Abfragepulse) durch eine Aussendung elektromagnetischer Wechselfelder (insb. im Frequenzbereich von 13,56 MHz) erzeugt, welche z. B. durch kapazitive Kopplung einen passiven NFC-Transponder in dem externen Kommunikationsgerät antreiben können. Sowohl passive als auch aktive Transponder können dabei genutzt werden, um das Abfragesignal zu erfassen, auszuwerten und dann ebenfalls ein Antwortsignal an die NFC-Vorrichtung zu sehen. Daraufhin kann ggf. der NFC-Datenaustausch, z. B. zur Authentifizierung des Bediener bzw. des Kommunikationsgeräts, beginnen. Zur Initiierung der Abfrage und/oder des (bidirektionalen) NFC-Datenaustausches kann ggf. auch die Messung der Sensorvorrichtung genutzt werden, so dass z. B. eine erkannte Annäherung des Bedieners durch die Sensorvorrichtung den Abfragepuls auslöst. Auch kann ein Abfragepuls ggf. nur dann ausgelöst werden, wenn die Sensorvorrichtung ein bestimmtes, vordefiniertes Bewegungsmuster erkennt.

Vorteilhafterweise kann im Rahmen der Erfindung vorgesehen sein, dass ungültige Messungen bei der Messung der Sensorvorrichtung dadurch vermieden und/oder reduziert werden, dass die NFC-Vorrichtung und die Sensorvorrichtung durch die Auswerte- und Steuervorrichtung zeitlich sequentiell betrieben werden. Der sequenzielle Betrieb bezieht sich dabei darauf, dass eine Messauswertung und/oder ein Betrieb der Sensorvorrichtung (d. h. die Messung der Kapazitätsänderung, insbesondere durch die Sensoreinheiten) ausschließlich vor und/oder nach einem Betrieb der NFC-Vorrichtung (d. h. z. B. einer Abfrage und/oder eines Datenaustausches der NFC-Vorrichtung mit einem Kommunikationsgerät) erfolgt. Es kann ebenfalls vorgesehen sein, dass bei einem notwendigen Betrieb der NFC-Vorrichtung (z. B. bei einem kommunikationsbereiten Kommunikationsgerät) der Betrieb der NFC-Vorrichtung prioritär vor dem Betrieb der Sensorvorrichtung erfolgt. Hierdurch werden Fehler der Messung der Sensorvorrichtung effektiv vermieden.

In einer weiteren Möglichkeit kann vorgesehen sein, dass bei einer Erkennung eines kommunikationsbereiten externen Kommunikationsgeräts die NFC-Vorrichtung insbesondere einen Datenaustausch einleitet und z. B. gleichzeitig eine Unterbrechungsanforderung an die Auswerte- und Steuervorrichtung sendet, wobei die Auswerte- und Steuervorrichtung insbesondere aufgrund der Unterbrechungsanforderung während des Datenaustausches die Messerfassung der Sensorvorrichtung unterbricht. Der Betrieb der Sensorvorrichtung wird also indirekt durch die NFC-Vorrichtung während eines Betriebs der NFC-Vorrichtung unterbrochen bzw. pausiert, insbesondere durch die Aussendung der Unterbrechungsanforderung. Die Unterbrechungsanforderung kann bspw. dadurch erfolgen, dass die NFC-Vorrichtung eine Potenzialänderung an einem IRQ-Eingang (Interrupt Request) der Auswerte- und Steuervorrichtung bewirkt. Dadurch unterbricht die Auswerte- und Steuervorrichtung z. B. sofort den weiteren Betrieb der Sensorvorrichtung, damit keine ungültigen Messungen der Sensorvorrichtung verwendet werden können, wodurch z. B. eine Funktion des Fahrzeugs wie eine Authentifikation aktiviert werden würde.

Ferner kann im Rahmen der Erfindung vorgesehen sein, dass die Auswerte- und Steuervorrichtung die Messerfassung der Sensorvorrichtung in Abhängigkeit eines von der Auswerte- und Steuervorrichtung empfangenen Ausgangssignals der NFC-Vorrichtung und/oder von der Auswerte- und Steuervorrichtung an die NFC-Vorrichtung gesendeten Eingangssignals durchführt. Auf diese Weise kann durch eine einfache schaltungstechnische Lösung vermieden werden, dass ein gleichzeitiger Betrieb bzw. eine gleichzeitige Ansteuerung der NFC-Vorrichtung und der Sensorvorrichtung stattfindet.

Zudem ist ein Türgriff, insbesondere ein Kraftfahrzeugtürgriff mit einer erfindungsgemäßen Vorrichtung Gegenstand der Erfindung. Ferner ist ein Fahrzeug, insbesondere Kraftfahrzeug, mit einem erfindungsgemäßen Türgriff und/oder einer erfindungsgemäßen Vorrichtung Gegenstand der Erfindung. Damit bringen der erfindungsgemäße Türgriff und das erfindungsgemäße Fahrzeug die gleichen Vorteile mit sich, wie sie ausführlich mit Bezug auf eine erfindungsgemäße Vorrichtung und ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1a: ein erfindungsgemäßes Kraftfahrzeug sowie einen erfindungsgemäßen Türgriff und eine erfindungsgemäße Vorrichtung in einer schematischen Darstellung in einer Seitenansicht,
- Figur 1b: eine weitere schematische Ansicht eines erfindungsgemäßen Fahrzeugs, eines erfindungsgemäßen Türgriffs, sowie einer erfindungsgemäßen Vorrichtung in einer Draufsicht,
- Figur 2: eine schematische Darstellung eines Schaltbildes einer Vorrichtung gemäß dem Stand der Technik,
- Figur 3: eine beispielhafte Darstellung eines Betriebsspannungsverlaufs einer NFC-Vorrichtung sowie einer Sensorvorrichtung,
- Figur 4: eine schematische Darstellung eines Schaltbildes einer erfindungsgemäßen Vorrichtung,
- Figur 5: eine Darstellung eines Messvorgangs gemäß einem ersten Ausführungsbeispiel der Erfindung,
- Figur 6: eine weitere Darstellung eines Messvorgangs gemäß einem weiteren Ausführungsbeispiel der Erfindung,
- Figur 7: eine weitere schematische Ansicht eines Schaltbildes einer erfindungsgemäßen Vorrichtung gemäß einem weiteren Ausführungsbeispiel,
- Figur 8: eine weitere schematische Ansicht eines Schaltbildes einer erfindungsgemäßen Vorrichtung gemäß einem weiteren Ausführungsbeispiel,
- Figur 9: eine weitere schematische Darstellung eines Schaltbildes einer erfindungsgemäßen Vorrichtung gemäß einem weiteren Ausführungsbeispiel,
- Figur 10: eine schematische Darstellung einer Anordnung einer erfindungsgemäßen Vorrichtung und
- Figur 11: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

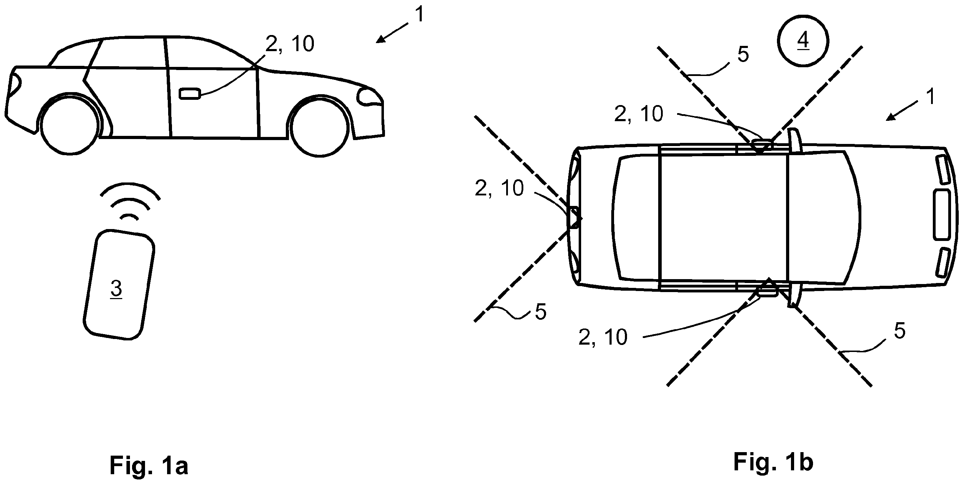

In Figur 1a ist schematisch ein erfindungsgemäßes Kraftfahrzeug 1 in einer Seitenansicht gezeigt, wobei an bzw. in einem erfindungsgemäßen Türgriff 2 eine erfindungsgemäße Vorrichtung 10 angeordnet ist. Selbstverständlich kann die erfindungsgemäße Vorrichtung 10 sowie der erfindungsgemäße Türgriff 2 an sämtlichen Türen, wie an Fahrer- und Beifahrerseite, des Fahrzeugs bzw. Kraftfahrzeugs 1 angeordnet sein. Dabei ist selbstverständlich auch eine Anordnung der erfindungsgemäßen Vorrichtung 10 z. B. an einem Griff zum Öffnen des Kofferraumdeckels möglich. Sämtliche Merkmale, welche dabei in Verbindung mit dem Begriff "Türgriff" beschrieben sind, gelten dabei selbstverständlich auch für einen sonstigen Griff des Fahrzeugs 1, wie z. B. am Kofferraumdeckel oder einer Motorhaube. Ebenfalls ist ein externes, insbesondere mobiles Kommunikationsgerät 3 gezeigt, wie ein Smartphone oder Laptop, welches z. B. eine NFC-Schnittstelle aufweist, um mit einer Kommunikationsvorrichtung (11), insbesondere einer NFC-Vorrichtung 11 der erfindungsgemäßen Vorrichtung 10 zu kommunizieren. Zusätzlich zur NFC-Vorrichtung 11 weist die Vorrichtung 10 eine Sensorvorrichtung 12 zur Detektion einer Annäherung eines Objektes 4 auf. Dieses ist in Figur 1b näher gezeigt, wobei vereinfacht der Erfassungsbereich 5 der Sensorvorrichtung 12 durch gestrichelte Linien dargestellt ist. Ein Objekt 4, das sich im Erfassungsbereich 5 (d. h. der Bereich zwischen den gestrichelten Linien) befindet und/oder in den Erfassungsbereich 5 eintritt, bewirkt dabei eine Kapazitätsänderung, welche von der Sensorvorrichtung 12 im Rahmen einer Messung 20 gemessen werden kann.

Wie sich aus den Figuren 1a und 1b ergibt, bietet sich aufgrund der geringen Kommunikationsentfernung der NFC-Vorrichtung 11 sowie des Erfassungsbereichs 5 der Sensorvorrichtung 12 im Bereich des Türgriffs 2 eine gemeinsame Anordnung in einem Türgriff 2 an. Hierdurch wird gewährleistet, dass bei Annäherung eines Bedieners, welche meist innerhalb des Erfassungsbereiches 5 zum Öffnen der Tür erfolgt, auch die NFC-Vorrichtung 11 das Kommunikationsgerät 3 des Bedieners (z. B. zur Authentifizierung) ansprechen kann. Dabei hat sich als nachteilhaft herausgestellt, dass Messungen 20 der Sensorvorrichtung 12 stark durch einen Betrieb der NFC-Vorrichtung 11 gestört werden. Dies wird im Folgenden noch näher erläutert.

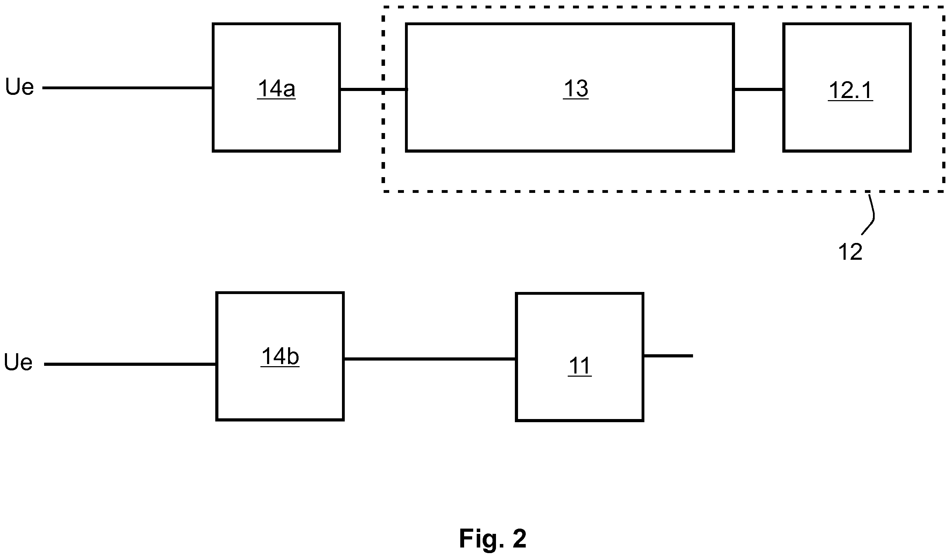

Um solche Störungen zu vermeiden, ist es daher aus dem Stand der Technik bekannt, wie in Figur 2 dargestellt ist, eine erste Spannungsvorrichtung 14a für die Sensorvorrichtung 12 sowie eine von der ersten Spannungsvorrichtung 14a separate und ggf. galvanisch getrennte und/oder baulich isolierte zweite Spannungsvorrichtung 14b für die NFC-Vorrichtung 11 vorzusehen. Da im Betrieb der NFC-Vorrichtung 11, insbesondere bei einer Abfrage und einem Datenaustausch, Spannungsschwankungen 22.1 auftreten, muss entsprechend Figur 2 bei den bekannten Lösungen derartiger Vorrichtungen eine separate Spannungseinstellung, d. h. z. B. Spannungsregelung erfolgen. Dies hat jedoch den Nachteil, dass aufgrund der zumindest zwei separaten Spannungsvorrichtungen 14 zur Spannungseinstellung die Vorrichtung kostenaufwändiger und komplexer in der Herstellung ist.

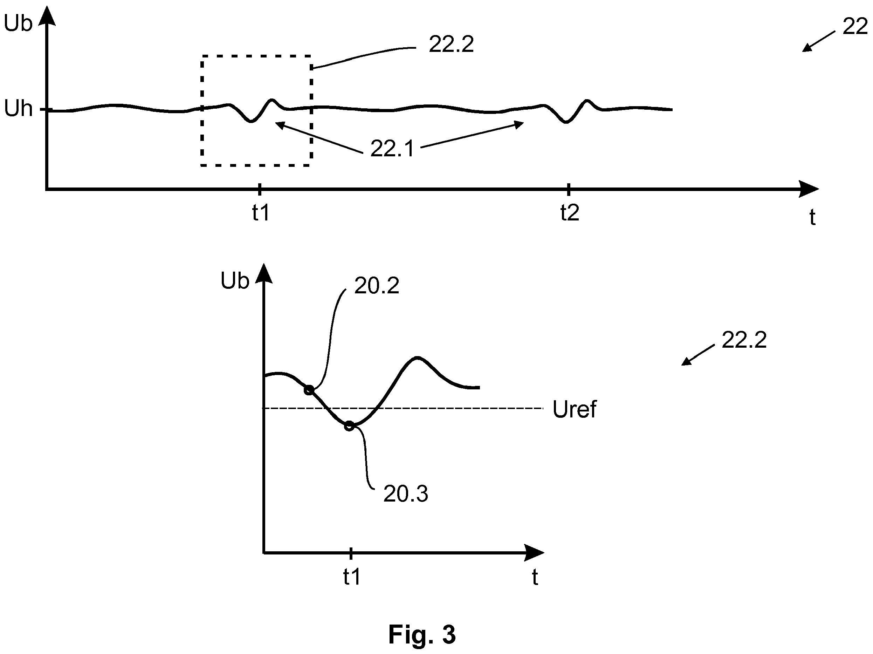

Zum weiteren Verständnis wird in Figur 3 beispielhaft der Betriebsspannungsverlauf 22 dargestellt, wobei zu den Zeitpunkten t1 und t2 die NFC-Vorrichtung 11 in Betrieb genommen wird (z. B. durch eine Abfrage der NFC-Vorrichtung oder durch eine Datenverbindung bzw. einen Datenaustausch). Daher ist zu diesen Zeitpunkten t1 und t2 der Energiebedarf der NFC-Vorrichtung 11 erhöht und bewirkt die dargestellte Spannungsschwankung 22.1. Der Einfluss der Spannungsschwankungen 22.1 wird anhand eines vergrößerten Bereichs 22.2 deutlich. Kurz vor dem Zeitpunkt t1 findet dabei eine gültige Messung 20.2 der Sensorvorrichtung 12 statt. Diese Messung liegt oberhalb einer Referenzspannung Uref. Daher kann durch diesen Messwert 20.2 die Aussage getroffen werden, dass keine signifikante Kapazitätsänderung erfolgt ist und damit kein Objekt 4 den Erfassungsbereich 5 betreten hat. Es wird nun angenommen, dass auch zum Zeitpunkt t2 keine signifikante Kapazitätsänderung oder eine Annäherung eines Objektes 4 erfolgt ist. Aufgrund der Spannungsschwankung 22.1 liegt der nächste gemessene Wert 20.3 jedoch unterhalb der Referenzspannung Uref. Die Sensorvorrichtung 12 meldet daher fälschlicherweise eine Kapazitätsänderung bzw. eine Annäherung. Es handelt sich damit bei der Messung 20.3 um eine ungültige Messung 20.3. Solche Spannungsschwankungen 22.1 treten verstärkt dann auf, wenn eine gemeinsame Spannungseinstellung der NFC-Vorrichtung 11 und der Sensorvorrichtung 12 durch eine einzige Spannungsvorrichtung 14 erfolgt. Durch die fehlerhafte Messung kann es leider auch zu einer fehlerhaften Funktion beim Fahrzeug 1 kommen, wodurch bspw. die Türen geöffnet werden.

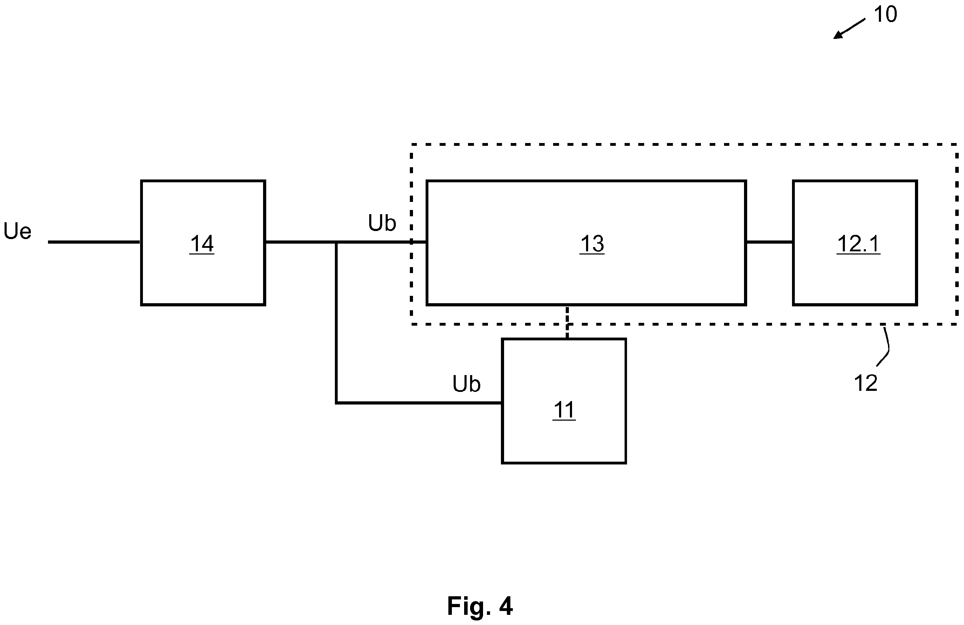

In Figur 4 ist schematisch der Aufbau einer erfindungsgemäßen Vorrichtung 10 gemäß einem ersten Ausführungsbeispiel gezeigt, wobei genau eine Spannungsvorrichtung 14 vorgesehen ist. Die Spannungsvorrichtung 14 weist eine Eingangsspannung (Versorgungsspannung Ue) auf und stabilisiert diese, d. h. gibt eine Betriebsspannung Ub aus, welche durch die Spannungsvorrichtung 14 auf eine vorgegebene Betriebsspannungshöhe Uh stabilisiert bzw. geregelt ist. Dieser Vorgang entspricht damit der Spannungseinstellung durch die Spannungsvorrichtung 14. Die Betriebsspannung Ub dient zur Energieversorgung, d. h. insbesondere zum Betrieb, der NFC-Vorrichtung 11 sowie der Sensorvorrichtung 12. Dabei weist die Sensorvorrichtung 12 eine Auswerte- und Steuervorrichtung 13 auf, die direkt mit der Spannungsvorrichtung 14 verbunden ist, und damit die Energieversorgung für die gesamte Sensorvorrichtung 12 aufnimmt und ggf. an Sensoreinheiten 12.1 weiterleitet. Die NFC-Vorrichtung 11 ist ebenfalls direkt mit der Spannungsvorrichtung 14 verbunden. Ferner weist die Sensorvorrichtung 12 die Sensoreinheit 12.1 auf, welche z. B. einen kapazitiven Messfühler der Sensorvorrichtung 12 darstellt. Die Energieversorgung der Sensoreinheit 12.1 erfolgt durch die Auswerte- und Steuervorrichtung 13. Dennoch ist die Spannungseinstellung der Energieversorgung der Sensoreinheit 12.1 direkt von der Spannungsvorrichtung 14 abhängig, da keine sonstigen Spannungsvorrichtungen 14 oder sonstige Vorrichtungen zur Spannungseinstellung vorgesehen sind. Es ist zudem durch eine gestrichelte Linie dargestellt, dass die Auswerte- und Steuervorrichtung 13 in Datenverbindung und/oder in elektrischer Verbindung mit der NFC-Vorrichtung 11 steht. Auf diese Weise ist eine Überwachung von z. B. den Eingangs- und Ausgangssignalen der NFC-Vorrichtung 11 durch die Auswerte- und Steuervorrichtung 13 möglich. Auch kann eine ggf. notwendige Auswerteelektronik der NFC-Vorrichtung 12 so kostengünstig ebenfalls in die Auswerte- und Steuervorrichtung 13 integriert werden.

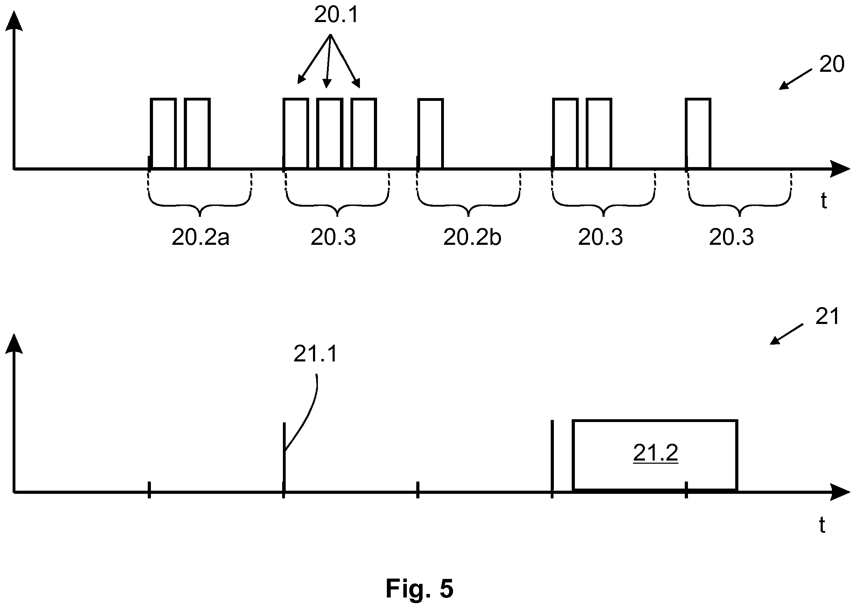

In Figur 5 wird gezeigt, wie bei einer Messung 20 ungültige Messungen 20.3 der Sensorvorrichtung 12 aufgrund von Spannungsschwankungen 22.1 reduziert werden können. Dabei ist schematisch eine Messung 20 der Sensorvorrichtung 12 und ein gleichzeitiger paralleler Betriebsverlauf 21 der NFC-Vorrichtung 11 durch ein entsprechendes Diagramm dargestellt. Es wird dabei insbesondere der zeitliche Verlauf t der Messung 20 bzw. des Betriebsverlaufs 21 gezeigt. Gleiche Zeitpunkte der Diagramme 20, 21 liegen dabei in der Darstellung von Figur 5 direkt übereinander. Es ist zu sehen, dass zur Kapazitätsmessung 20 der Sensorvorrichtung 12 in regelmäßigen Abständen, d. h. zyklisch, Entladeimpulse 20.1 bis zur Entladung, d. h. bis zum Erreichen einer Referenzspannung Uref, gezählt werden. Hierzu findet z. B. eine getaktete Entladung eines parallel zur zu messenden Kapazität liegenden Referenzkondensators statt, wobei die zur Entladung notwendigen Takte insbesondere durch die dargestellten Entladeimpulse 20.1 repräsentiert werden können. Die Messungen 20.2a und 20.2b stellen dabei erste (20.2a) und zweite (20.2b) gültige Messungen dar, wobei hier eine Verringerung der Anzahl der Entladeimpulse 20.1 und damit eine Kapazitätsänderung festgestellt werden kann. Gleichzeitig zu den Messungen 20.2a und 20.2b findet kein Betrieb der NFC-Vorrichtung statt. Jedoch erkennt die Auswerte- und Steuervorrichtung 13, dass gleichzeitig zu den Messungen 20.3 ein Abfragepuls 21.1 der NFC-Vorrichtung 11 sowie ein NFC-Datenaustausch 21.2 erfolgt. Diese dadurch als ungültig interpretierte Messungen 20.3 werden daher durch die Auswerte- und Steuervorrichtung 13 entsprechend gekennzeichnet und/oder direkt verworfen. Auf diese Weise können ungültige Messungen 20.3 mit fehlerhaften Messwerten aufgrund von Störungen der Messung 20 vermieden werden.

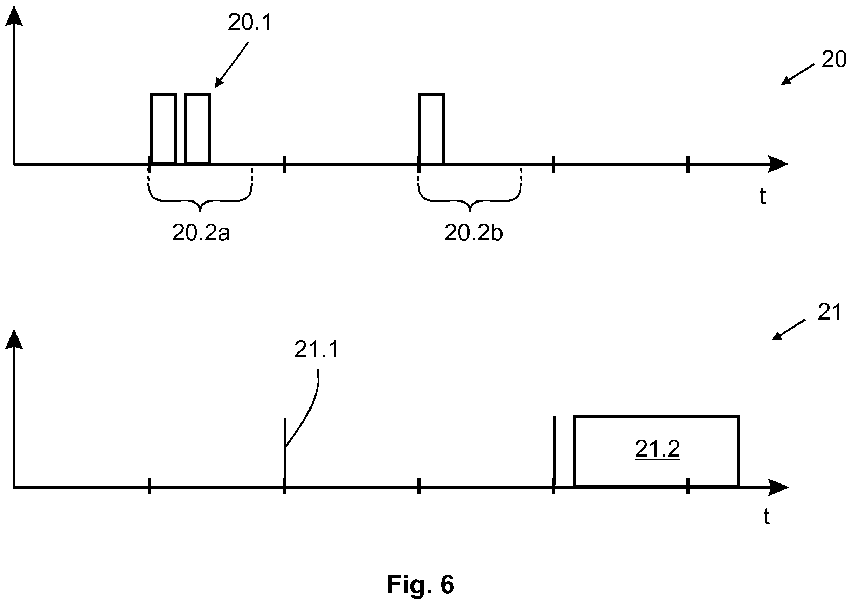

In Figur 6 ist ein Vorgehen zur Reduzierung von ungültigen Messungen 20.3 gemäß eines weiteren Ausführungsbeispiels der erfindungsgemäßen Vorrichtung 10 gezeigt. Dabei erkennt ebenfalls die Auswerte- und Steuervorrichtung 13 den Betrieb der NFC-Vorrichtung 11. Statt jedoch zu diesen Zeitpunkten eine Messung 20 durchzuführen und die entsprechenden ungültigen Messwerte der Messungen 20.3 zu verwerfen bzw. zu kennzeichnen, unterbricht die Auswerte- und Steuervorrichtung 13 stattdessen den Betrieb, insbesondere die Messung 20, der Sensorvorrichtung 12. Es findet also keine Erfassung von Messwerten zu diesen Zeitpunkten statt. Dies hat bspw. den Vorteil einer weiteren Energieersparnis und einer weniger komplexen Auswertung.

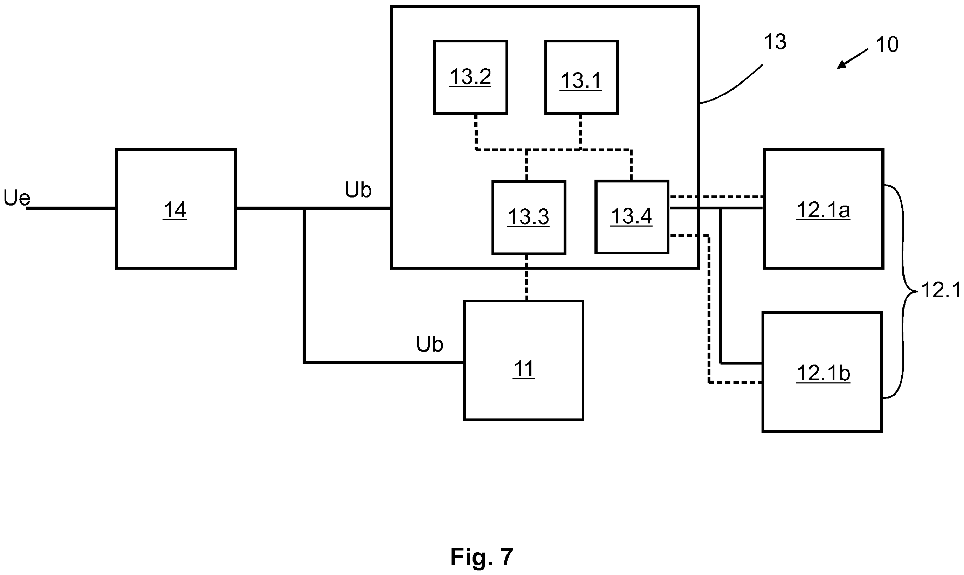

In Figur 7 ist ein schematischer Aufbau der erfindungsgemäßen Vorrichtung gemäß einem weiteren Ausführungsbeispiel gezeigt. Dabei ist zu sehen, dass die Auswerte- und Steuervorrichtung 13 in elektrischer Verbindung mit der NFC-Vorrichtung 11 sowie den Sensoreinheiten 12.1 steht, wie mit einer gestrichelten Verbindungslinie dargestellt ist. Die Sensorvorrichtung 12 weist dabei die Auswerte- und Steuervorrichtung 13 sowie eine erste Sensoreinheit 12.1a und eine zweite Sensoreinheit 12.1b auf. Für eine verbesserte Messgenauigkeit der Sensorvorrichtung 12 ist es zudem denkbar, dass noch weitere Sensoreinheiten 12.1 vorgesehen sein können. Zur Ansteuerung der NFC-Vorrichtung 11 umfasst die Auswerte- und Steuervorrichtung 13 zudem eine NFC-Ansteuerungseinheit 13.3, welche z. B. als Datenschnittstelle ausgebildet ist. Ebenfalls ist eine Sensoransteuerungseinheit 13.4 vorgesehen, welche mit den Sensoreinheiten 12.1 verbunden ist und eine Ansteuerung und/oder Messauswertung der Sensoreinheiten 12.1 durchführen kann. Hierzu weist die Sensoransteuerungseinheit 13.4 z. B. eine integrierte Schaltung zur Kapazitätsmessung 20, z. B. mittels dem Umladeverfahren, auf. Sowohl die Sensoransteuerungseinheit 13.4 als auch die NFC-Ansteuerungseinheit 13.3 sind mit einer Speichereinheit 13.1, insbesondere einer nicht-flüchtigen Speichereinheit 13.1, und einer Schnittstelleneinheit 13.2 zur Fahrzeugelektronik verbunden. Die Auswerte- und Steuervorrichtung 13 umfasst die Speichereinheit 13.1 und die Schnittstelleneinheit 13.2 bzw. integriert diese innerhalb eines integrierten Schaltkreises. Es können damit z. B. gemessene Kapazitätswerte der Sensorvorrichtung 12 oder empfangene Daten der NFC-Vorrichtung 11 durch die Schnittstelleneinheit 13.2 an die Fahrzeugelektronik übermittelt werden. Auch eine Speicherung dieser Daten in der Speichereinheit 13.1 ist möglich, um diese Daten z. B. über die NFC-Vorrichtung 11 an ein externes Kommunikationsgerät zu übertragen.

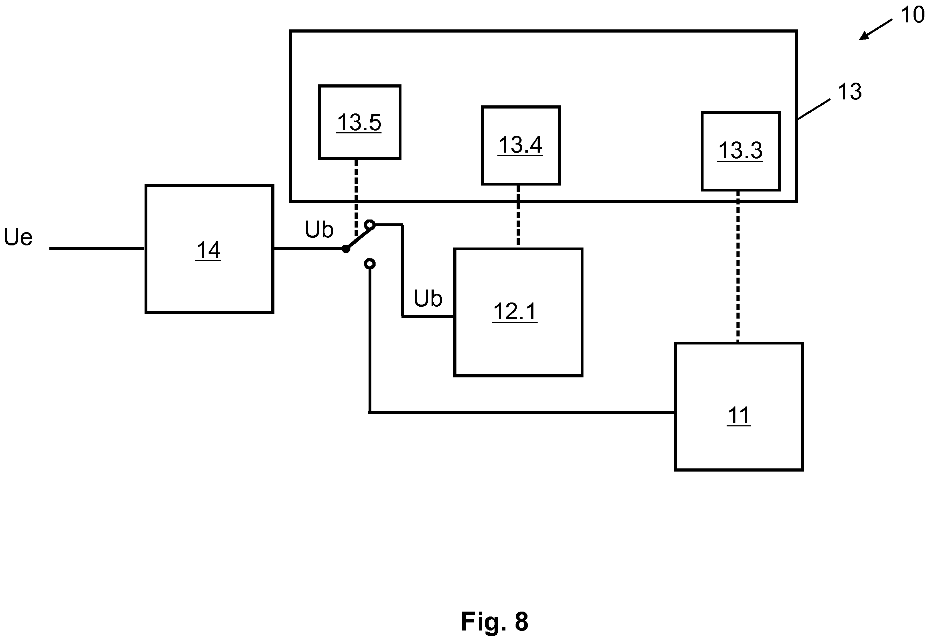

In Figur 8 ist eine weitere schematische Darstellung eines weiteren Ausführungsbeispiels der erfindungsgemäßen Vorrichtung 10 gezeigt. Damit ein gleichzeitiger Betrieb der NFC-Vorrichtung 11 und der Sensorvorrichtung 12 vermieden wird, kann die Auswerte- und Steuervorrichtung 13 eine Schalteinheit 13.5 aufweisen. Diese Schalteinheit 13.5 ist in der Lage, zwischen einem Betrieb und/oder einer Messerfassung und/oder einer Energieversorgung der Sensoreinheit 12.1 und eines Betriebs und/oder einer Datenerfassung und/oder einer Energieversorgung der NFC-Vorrichtung 11 umzuschalten. Die Schalteinheit 13.5 kann dazu einen Umschalter aufweisen und/oder ansteuern, welcher z. B. die Spannungsvorrichtung 14 mit der Auswerte- und Steuervorrichtung 13, der NFC-Vorrichtung 11 und/oder den Sensoreinheiten 12.1 elektrisch verbindet bzw. zwischengeschaltet ist, um den Schaltkreis entsprechend beeinflussen zu können.

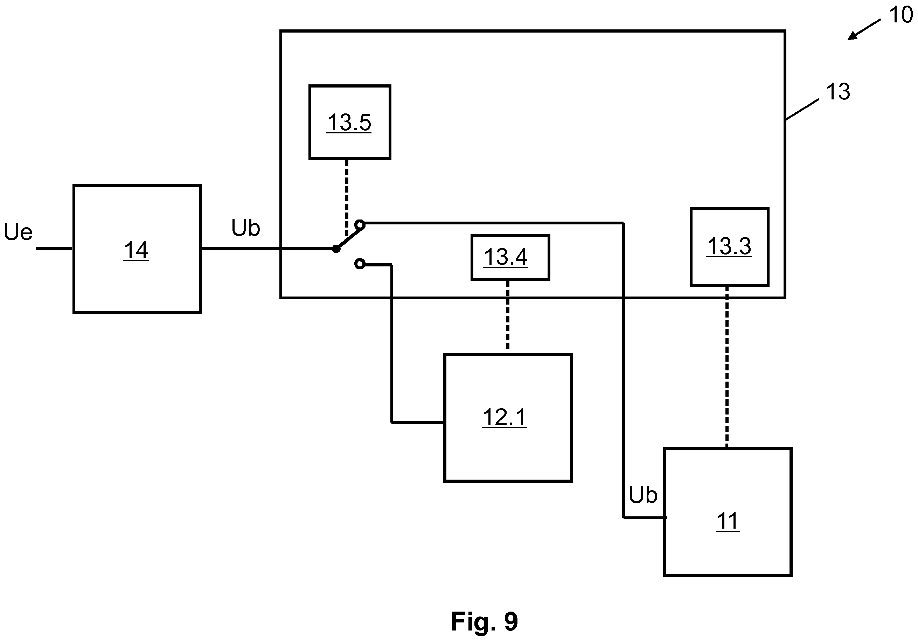

Wie in Figur 9 gezeigt ist, kann der Umschalter auch in der Auswerte- und Steuervorrichtung 13 der Sensorvorrichtung 12 integriert sein. Dabei kann es möglich sein, dass die Energieversorgung der Sensoreinheiten 12.1 und der NFC-Vorrichtung 11 über Anschlüsse der Auswerte- und Steuervorrichtung 13 erfolgt. Die Anschlüsse sind dann mit dem Umschalter verbunden, um die Energieversorgung steuern zu können.

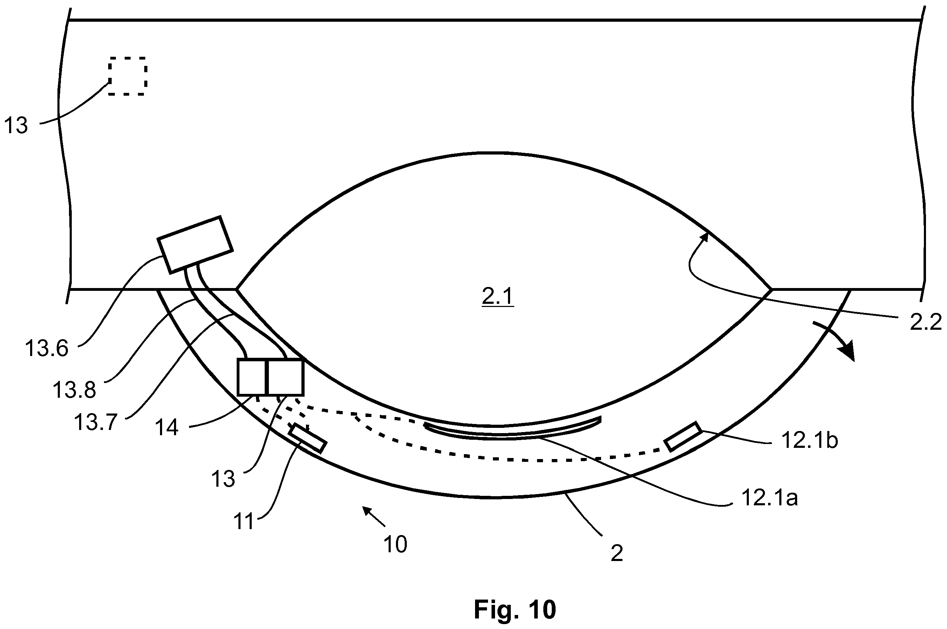

In Figur 10 ist schematisch ein Querschnitt eines erfindungsgemäßen Türgriffs 2 gezeigt, wobei die Anordnung der erfindungsgemäßen Vorrichtung 10, insbesondere im Inneren des Türgriffs 2, schematisch dargestellt ist. Der Türgriff 2 ist dabei schwenkbar an einer Außenfläche bzw. einem Türblech 2.2 einer Tür eines Fahrzeugs 1 angeordnet, und besitzt fahrzeugseitig eine Griffmulde 2.1. Zum Öffnen bzw. Entriegeln der Tür wird bspw. eine Annäherung einer Hand bei dem Eingreifen in die Griffmulde 2.1 von einer Sensorvorrichtung 12 detektiert. Zum Öffnen kann der Türgriff 2 dann bspw. in Richtung des dargestellten Pfeils bewegt bzw. verschwenkt werden. Der Erfassungsbereich 5 der Sensorvorrichtung 12 erstreckt sich zur Erfassung des Eingreifens innerhalb der Griffmulde 2.1, wobei eine erste Sensoreinheit 12.1a der Sensorvorrichtung 12 als Messfühler für die Kapazitätsänderung durch die Annäherung dient. Neben der ersten Sensoreinheit 12.1a ist auch eine zweite Sensoreinheit 12.1b in dem Türgriff 2 integriert, dessen Erfassungsbereich 5 abseits der Griffmulde 2.1 im Bereich der Vorderseite des Türgriffs 2 liegt. So kann z. B. die Annäherung einer Hand zum Schließen des Türgriffs 2 durch die zweite Sensoreinheit 12.1b erfasst werden. Dies ist insbesondere nützlich, wenn die erfindungsgemäße Vorrichtung 10 für ein Keyless-Go System des Fahrzeugs 1 genutzt wird. Dabei trägt ein Bediener ein externes Kommunikationsgerät 3, z. B. einen Identifikationsgeber, Laptop und/oder Smartphone, lediglich bei sich, wobei automatisch bei der Detektierung einer Annäherung durch die Sensorvorrichtung 12 eine Authentifizierung mit dem Kommunikationsgerät 3 eingeleitet wird. Ferner kann bei Annäherung, z. B. initiiert durch die Sensorvorrichtung 12 und/oder einen Abfragepuls 21.1 einer NFC-Vorrichtung 11, ein NFC-Datenaustausch 21.2 initiiert werden. Innerhalb des Türgriffs 2 kann daher auch die NFC-Vorrichtung 11, insbesondere angrenzend (und ggf. kontaktierend) zu einer Spannungsvorrichtung 14 und/oder Auswerte- und Steuervorrichtung 13 angeordnet sein. Eine Anordnung der NFC-Vorrichtung 11 möglichst nahe zur Spannungsvorrichtung 14 hat dabei den Vorteil, dass Störeinflüsse reduziert werden können. Die NFC-Vorrichtung 11 weist dabei ggf. einen ähnlichen Erfassungsbereich 5 wie die erste oder zweite Sensoreinheit 12.1a, 12.1b auf. Auch kann es möglich sein, dass innerhalb des Türgriffs 2 mehrere NFC-Vorrichtungen 11 und/oder mehrere Antennen der NFC-Vorrichtung 11 mit unterschiedlichen Erfassungsbereichen 5 angeordnet sind. Zur Energieversorgung und/oder Spannungseinstellung ist die NFC-Vorrichtung 11 dabei mit einer Spannungsvorrichtung 14 elektrisch verbunden. Für einen Daten- und/oder Signalaustausch, insbesondere zur Überwachung von Eingangs- und/oder Ausgangssignalen, ist die NFC-Vorrichtung 11 zudem mit der Auswerte- und Steuervorrichtung 13 elektrisch verbunden. Die entsprechenden Verbindungen sind dabei in Figur 10 durch gestrichelte Linien dargestellt. Weiter sind zumindest eine Sensoreinheit 12.1 innerhalb des Türgriffs 2 ebenfalls mit der Auswerte- und Steuervorrichtung 13 zum Betrieb, zur Energieversorgung, zur Ansteuerung und/oder zur Messwerterfassung verbunden. Die Auswerte- und Steuervorrichtung 13 kann alternativ auch außerhalb des Türgriffs 2, z. B. im Fahrzeuginneren und/oder in der Fahrzeugelektronik, angeordnet sein, wie durch eine gestrichelte Linie dargestellt ist. Auf diese Weise ist z. B. eine einfache Verbindung mit der Fahrzeugelektronik des Fahrzeugs möglich. Ferner dient zur einfachen Verbindung mit der Fahrzeugelektronik auch ggf. eine Steckverbindung 13.6, welche eine Datenleitung 13.7 sowie eine elektrische Leitung 13.8 zur Energieversorgung aufweist. Über die Leitung 13.8 zur Energieversorgung ist z. B. die Spannungsvorrichtung 14 mit der Versorgungsspannung Ue verbunden. Die Datenleitung 13.7 kann mit der Auswerte- und Steuervorrichtung 13 und/oder direkt mit der NFC-Vorrichtung 11 verbunden sein, um Daten (z.B. des NFC-Datenaustausches) mit der Fahrzeugelektronik und/oder einer externen Auswerte- und Steuervorrichtung 13 auszutauschen. Auch ist es denkbar, dass die Auswerte- und Steuervorrichtung 13 ein monolithisches Bauteil mit der Spannungsvorrichtung 14 bildet, wobei z. B. die Auswerte- und Steuervorrichtung 13 und die Spannungsvorrichtung 14 gemeinsam als ggf. integrierter Schaltkreis, insbesondere als Mikrocontroller, ausgebildet sind.

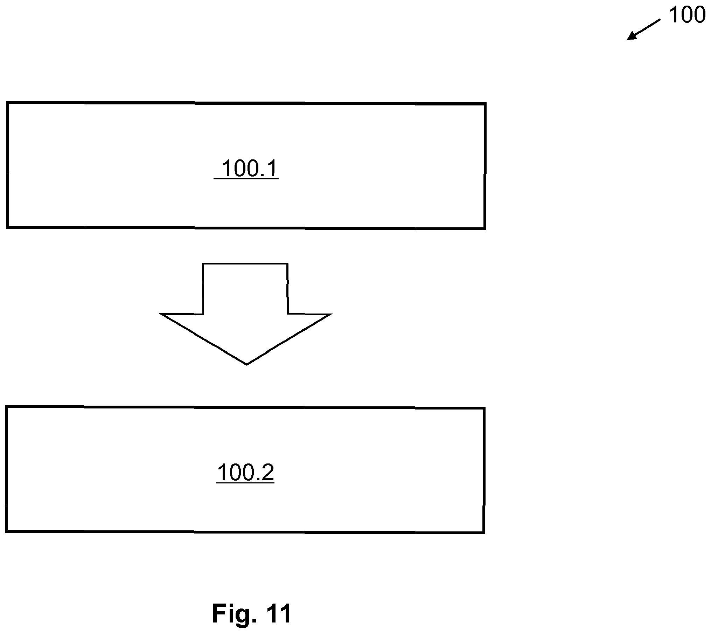

Figur 11 visualisiert schematisch ein erfindungsgemäßes Verfahren 100. Dabei erfolgt in einem ersten Verfahrensschritt 100.1 eine Ansteuerung der NFC-Vorrichtung 11 und erst danach, also gemäß einer sequenziellen Ausführung im Verfahrensschritt 100.2 eine Ansteuerung der Sensorvorrichtung 12 durch die Auswerte- und Steuervorrichtung 13.

Die voranstehenden Erläuterungen der Ausführungsformen beschreiben die vorliegende Erfindung ausschließlich im Rahmen von Beispielen. Selbstverständlich können einzelne Merkmale der Ausführungsformen, sofern technisch sinnvoll frei miteinander kombiniert werden, ohne den Rahmen der vorliegenden Erfindung zu verlassen.

### Bezugszeichenliste

- 1: Fahrzeug
- 2: Türgriff
- 2.1: Griffmulde
- 2.2: Türblech
- 3: Externes Kommunikationsgerät
- 4: Objekt
- 5: Erfassungsbereich

- 10: Vorrichtung
- 11: NFC-Vorrichtung, Kommunikationsvorrichtung
- 12: Sensorvorrichtung
- 12.1: Sensoreinheit
- 12.1a: Erste Sensoreinheit
- 12.1b: Zweite Sensoreinheit

- 13: Auswerte- und Steuervorrichtung
- 13.1: Speichereinheit
- 13.2: Schnittstelleneinheit zur Fahrzeugelektronik
- 13.3: NFC-Ansteuerungseinheit
- 13.4: Sensoransteuerungseinheit
- 13.5: Schalteinheit
- 13.6: Steckverbindung
- 13.7: Datenleitung
- 13.8: Elektrische Leitung

- 14: Spannungsvorrichtung
- 14a: Erste Spannungsvorrichtung
- 14b: Zweite Spannungsvorrichtung
- 20: Messung der Sensorvorrichtung/Kapazitätsmessung
- 20.1: Entladeimpulse/Takte
- 20.2: Gültige Messung
- 20.2a: Erste gültige Messung
- 20.2b: Zweite gültige Messung
- 20.3: Ungültige Messung

- 21: Betriebsverlauf der NFC-Vorrichtung/Kommunikationsvorrichtung
- 21.1: Abfragepuls
- 21.2: NFC-Datenaustausch

- 22: Betriebsspannungsverlauf
- 22.1: Spannungsschwankungen
- 22.2: Vergrößerter Bereich

- 100: Verfahren
- 100.1: Erster Verfahrensschritt
- 100.2: Zweiter Verfahrensschritt

- Ub: Betriebsspannung
- Ue: Versorgungsspannung
- Uh: vorgegebene Betriebsspannungshöhe
- Uref: Referenzspannung
- t: Zeit
- t1: Erster Zeitpunkt
- t2: Zweiter Zeitpunkt

## Patentansprüche

1. Vorrichtung (10) zur Daten- und Messerfassung für einen Türgriff (2) eines Fahrzeuges (1), mit zumindest
einer Kommunikationsvorrichtung (11), insbesondere NFC-Vorrichtung (11) zum NFC-Datenaustausch mit einem externen Kommunikationsgerät (3), und zumindest einer Sensorvorrichtung (12) zur Messung (20) einer Kapazitätsänderung,
**dadurch gekennzeichnet,**
**dass** genau eine Spannungsvorrichtung (14) zur gemeinsamen Spannungseinstellung der zumindest einen Kommunikationsvorrichtung (11) und der zumindest einen Sensorvorrichtung (12) vorgesehen ist,
wobei die Spannungsvorrichtung (14) zur gemeinsamen Spannungseinstellung einen Spannungsregler und/oder einen Spannungsstabilisator aufweist oder als Spannungsregler und/oder als Spannungsstabilisator ausgebildet ist, wobei
die Vorrichtung (10) eine Auswerte- und Steuervorrichtung (13) aufweist, die dazu ausgebildet ist, einen zumindest teilweise gleichzeitigen Betrieb (21) zum Zeitpunkt (t1) der Kommunikationsvorrichtung (11) und der Sensorvorrichtung (12) messtechnisch zu erfassen, um dann den zum Zeitpunkt (t1) erfassten Messwert (20.3) der Sensorvorrichtung (12) durch die Auswerte- und Steuervorrichtung (13) als fehlerhaft zu kennzeichnen.

2. Vorrichtung (10) nach Anspruch 1,
**dadurch gekennzeichnet,**
**dass** die Sensorvorrichtung (12) eine Auswerte- und Steuervorrichtung (13) und zumindest eine Sensoreinheit (12.1), insbesondere einen kapazitiven Sensor (12.1), aufweist, wobei vorzugsweise durch die Auswerte- und Steuervorrichtung (13) sowohl eine Ansteuerung der Kommunikationsvorrichtung (11), insbesondere NFC-Vorrichtung (11), als auch der zumindest einen Sensoreinheit (12.1) durchführbar ist.

3. Vorrichtung (10) nach Anspruch 1 oder 2,
**dadurch gekennzeichnet,**
**dass** zur Erfassung von Eingangssignalen und/oder Ausgangssignalen die Auswerte- und Steuervorrichtung (13) elektrisch mit der Kommunikationsvorrichtung (11), insbesondere NFC-Vorrichtung (11), und/oder zumindest einer Sensoreinheit (12.1) verbunden ist, und insbesondere durch die Kommunikationsvorrichtung (11), insbesondere NFC-Vorrichtung (11), verursachte Störungen der Messung (20) dadurch reduzierbar sind, dass durch die Auswerte- und Steuervorrichtung (13) die Eingangssignale und/oder Ausgangssignale überwacht werden.

4. Vorrichtung (10) nach einem der vorhergehenden Ansprüche,
**dadurch gekennzeichnet,**
**dass** die Spannungseinstellung der Kommunikationsvorrichtung (11), insbesondere NFC-Vorrichtung (11), und der Sensorvorrichtung (12), insbesondere einer Auswerte- und Steuervorrichtung (13) und/oder einer Sensoreinheit (12.1) der Sensorvorrichtung (12), direkt durch die Spannungsvorrichtung (14) durchführbar ist, wobei insbesondere die Auswerte- und Steuervorrichtung (13) zur Energieversorgung der Sensoreinheit (12.1) mit der Sensoreinheit (12.1) elektrisch verbunden ist.

5. Vorrichtung (10) nach einem der vorhergehenden Ansprüche,
**dadurch gekennzeichnet,**
**dass** die Kommunikationsvorrichtung (11) in der Form einer NFC-Vorrichtung (11) vorgesehen ist.

6. Vorrichtung (10) nach einem der vorhergehenden Ansprüche,
**dadurch gekennzeichnet,**
**dass** die Auswerte- und Steuervorrichtung (13) eine Datenverbindung, insbesondere eine SPI-Verbindung, zur Kommunikationsvorrichtung (11), insbesondere NFC-Vorrichtung (11), und/oder zu zumindest einer Sensoreinheit (12.1) und/oder zur Fahrzeugelektronik aufweist, wobei insbesondere über die Datenverbindung Daten zur Ansteuerung und/oder Auswertung übertragbar sind und/oder
**dass** durch die Auswerte- und Steuervorrichtung (13) Daten des Datenaustausches der Kommunikationsvorrichtung (11), insbesondere NFC-Vorrichtung (11), empfangbar, auswertbar und/oder an eine mit der Auswerte- und Steuervorrichtung (13) verbindbare Fahrzeugelektronik übertragbar sind, insbesondere zur Durchführung einer Identifikationsprüfung, wobei zur Verbindung mit der Fahrzeugelektronik insbesondere eine Schnittstelleneinheit (13.2) vorgesehen ist.

7. Vorrichtung (10) nach einem der vorhergehenden Ansprüche,
**dadurch gekennzeichnet,**
**dass** eine nicht-flüchtige Speichereinheit (13.1) vorgesehen ist, wobei die nicht-flüchtige Speichereinheit (13.1) Daten, und insbesondere Daten mit Informationen über Fahrzeugparameter umfasst, wobei die Daten durch die Kommunikationsvorrichtung (11), insbesondere NFC-Vorrichtung (11), übertragbar und/oder empfangbar sind und/oder
**dass** eine Schalteinheit (13.5) vorgesehen ist, um zur Reduzierung von Störungen der Messung (20) zwischen einem Betrieb zumindest einer Sensoreinheit (12.1) der Sensorvorrichtung (12) und der Kommunikationsvorrichtung (11), insbesondere NFC-Vorrichtung (11), umzuschalten, wobei die Schalteinheit (13.5) insbesondere in der Auswerte- und Steuervorrichtung (13) integriert ist.

8. Verfahren (100) zum Betreiben einer Vorrichtung (10) zur Daten- und Messerfassung für einen Türgriff (2) eines Fahrzeuges (1), mit zumindest
einer Kommunikationsvorrichtung (11), insbesondere NFC-Vorrichtung (11) zum NFC-Datenaustausch mit einem externen Kommunikationsgerät (3), und zumindest einer Sensorvorrichtung (12) zur Messung (20) einer Kapazitätsänderung,
**dadurch gekennzeichnet,**
**dass** genau eine Spannungsvorrichtung (14) der gemeinsamen Spannungseinstellung der zumindest einen Kommunikationsvorrichtung (11) und der zumindest einen Sensorvorrichtung (12) dient, wobei
die Spannungsvorrichtung (14) zur gemeinsamen Spannungseinstellung einen Spannungsregler und/oder einen Spannungsstabilisator aufweist oder als Spannungsregler und/oder als Spannungsstabilisator ausgebildet ist, wobei
ein zumindest teilweise gleichzeitiger Betrieb (21) zum Zeitpunkt (t1) der Kommunikationsvorrichtung (11) und der Sensorvorrichtung (12) durch eine Auswerte- und Steuervorrichtung (13) messtechnisch erfasst wird, wobei dann der zum Zeitpunkt (t1) erfasste Messwert (20.3) der Sensorvorrichtung (12) durch die Auswerte- und Steuervorrichtung (13) als fehlerhaft gekennzeichnet wird.

9. Verfahren (100) nach Anspruch 8,
**dadurch gekennzeichnet,**
**dass** die Ansteuerung durch die Auswerte- und Steuervorrichtung (13) derart erfolgt, dass durch einen Betrieb (21) der Kommunikationsvorrichtung (11), insbesondere NFC-Vorrichtung (11), verursachte Störungen der Messung (20) der Sensorvorrichtung (12) verhindert werden, insbesondere dadurch, dass die Auswerte- und Steuervorrichtung (13) einen gleichzeitigen Betrieb der Kommunikationsvorrichtung (11), insbesondere NFC-Vorrichtung (11), und der Sensorvorrichtung (12) detektiert und/oder blockiert.

10. Verfahren (100) nach einem der vorhergehenden Verfahrensansprüche,
**dadurch gekennzeichnet,**
**dass** durch eine Auswerte- und Steuervorrichtung (13) eine Messung (20) der Sensorvorrichtung (12) zyklisch initiiert wird und eine Abfrage der Kommunikationsvorrichtung (11), insbesondere NFC-Vorrichtung (11), in zeitlicher Abhängigkeit der Messung (20), insbesondere zyklisch nach einer definierten Anzahl Messungen (20), durchgeführt wird.

11. Verfahren (100) nach einem der vorhergehenden Verfahrensansprüche,
**dadurch gekennzeichnet,**
**dass** die Kommunikationsvorrichtung (11), insbesondere NFC-Vorrichtung (11), und die Sensorvorrichtung (12), insbesondere eine Auswerte- und Steuervorrichtung (13) der Sensorvorrichtung (12), durch die Spannungsvorrichtung (14) mit einer gleichen elektrischen Betriebsspannung (Ub) betrieben werden und/oder mit einem gleichen elektrischen Potential verbunden sind, wobei insbesondere eine Spannung zum Betrieb einer Sensoreinheit (12.1) der Sensorvorrichtung (12) unmittelbar und/oder ausschließlich von dieser Betriebsspannung (Ub) abhängt und/oder
**dass** durch die Kommunikationsvorrichtung (11), insbesondere NFC-Vorrichtung (11), eine Abfrage, insbesondere durch Abfragepulse (21.1), zyklisch durchgeführt wird, um somit ein kommunikationsbereites externes Kommunikationsgerät (3), insbesondere im Nahbereich des Türgriffs (2), zu detektieren, wobei eine solche Abfrage der Kommunikationsvorrichtung (11), insbesondere NFC-Vorrichtung (11), stets durch die Auswerte- und Steuervorrichtung (13) messtechnisch erfasst wird.

12. Verfahren (100) nach einem der vorhergehenden Verfahrensansprüche,
**dadurch gekennzeichnet,**
**dass** ungültige Messungen (20.3) bei der Messung (20) der Sensorvorrichtung (12) dadurch vermieden und/oder reduziert werden, dass die Kommunikationsvorrichtung (11), insbesondere NFC-Vorrichtung (11), und die Sensorvorrichtung (12) durch die Auswerte- und Steuervorrichtung (13) zeitlich sequentiell betrieben werden.

13. Verfahren (100) nach einem der vorhergehenden Verfahrensansprüche,
**dadurch gekennzeichnet,**
**dass** bei einer Erkennung eines kommunikationsbereiten externen Kommunikationsgeräts (3) die Kommunikationsvorrichtung (11), insbesondere NFC-Vorrichtung (11), eine Unterbrechungsanforderung an die Auswerte- und Steuervorrichtung (13) sendet, um insbesondere einen Datenaustausch einzuleiten, wobei die Auswerte- und Steuervorrichtung (13) insbesondere während des Datenaustausches die Messerfassung der Sensorvorrichtung (12) unterbricht.

14. Verfahren (100) nach einem der vorhergehenden Verfahrensansprüche,
**dadurch gekennzeichnet,**
**dass** die Auswerte- und Steuervorrichtung (13) die Messerfassung der Sensorvorrichtung (12) in Abhängigkeit eines von der Auswerte- und Steuervorrichtung (13) empfangenen Ausgangssignals der Kommunikationsvorrichtung (11), insbesondere NFC-Vorrichtung (11), und/oder von der Auswerte- und Steuervorrichtung (13) an die Kommunikationsvorrichtung (11), insbesondere NFC-Vorrichtung (11), gesendeten Eingangssignals durchführt.

## Claims

1. Device (10) for data and measurement acquisition for a door handle (2) of a vehicle (1), having at least one communication device (11), in particular an NFC device (11) for NFC data exchange with an external communication device (3), and at least one sensor device (12) for measuring (20) a change in capacitance,
**characterized in that**
exactly one voltage device (14) is provided for the common voltage setting of the at least one communication device (11) and the at least one sensor device (12),
wherein the voltage device (14), for common voltage setting, has a voltage regulator and/or a voltage stabilizer, and/or is configured as a voltage regulator and/or a voltage stabilizer, wherein
the device (10) has an evaluation and control device (13) which is designed to detect by measurement an at least partially simultaneous operation (21) at the time (t1) of the communication device (11) and of the sensor device (12), in order to then identify the measured value (20.3) of the sensor device (12) detected at the time (t1) as incorrect by the evaluation and control device (13).

2. Device (10) according to claim 1,
**characterized in that**
the sensor device (12) has an evaluation and control device (13) and at least one sensor unit (12.1), in particular a capacitive sensor (12.1), it preferably being possible for the evaluation and control device (13) to control both the communication device (11), in particular the NFC device (11), and the at least one sensor unit (12.1).

3. Device (10) according to claim 1 or 2,
**characterized in that,**
in order to detect input signals and/or output signals, the evaluation and control device (13) is electrically connected to the communication device (11), in particular the NFC device (11), and/or at least one sensor unit (12.1), and disturbances in the measurement (20) caused in particular by the communication device (11), in particular the NFC device (11), can be reduced **in that** the input signals and/or output signals are monitored by the evaluation and control device (13).

4. The device (10) according to any one of the preceding claims,
**characterized in that**
the voltage setting of the communication device (11), in particular the NFC device (11), and of the sensor device (12), in particular an evaluation and control device (13) and/or a sensor unit (12.1) of the sensor device (12), can be carried out directly by the voltage device (14), the evaluation and control device (13), in particular, for supplying power to the sensor unit (12.1) being electrically connected to the sensor unit (12.1).

5. Device (10) according to any one of the preceding claims,
**characterized in that**
the communication device (11) is provided in the form of an NFC device (11).

6. Device (10) according to any one of the preceding claims,
**characterized in that**
the evaluation and control device (13) has a data connection, in particular an SPI connection, to the communication device (11), in particular an NFC device (11), and/or to at least one sensor unit (12.1) and/or to the vehicle electronics, it being possible to transmit data for activation and/or evaluation, in particular via the data connection, and/or in that, by the evaluation and control device (13), data of the data exchange of the communication device (11), in particular NFC device (11), can be received, evaluated and/or transmitted to vehicle electronics which can be connected to the evaluation and control device (13), in particular for carrying out an identification check, wherein for a connection to the vehicle electronics, in particular an interface unit (13.2) is provided.

7. Device (10) according to any one of the preceding claims,
**characterized in that**
a non-volatile memory unit (13.1) is provided, wherein the non-volatile memory unit (13.1) comprises data, and in particular data with information about vehicle parameters, wherein the data is transmittable and/or receivable by the communication device (11), in particular NFC device (11), and/or
**in that** a switching unit (13.5) is provided in order to switch between an operation of at least one sensor unit (12.1) of the sensor device (12) and the communication device (11), in particular NFC device (11), in order to reduce disturbances in the measurement (20), wherein the switching unit (13.5) is integrated in particular in the evaluation and control device (13).

8. Method (100) for operating a device (10) for data and measurement acquisition for a door handle (2) of a vehicle (1), having at least one communication device (11), in particular an NFC device (11) for NFC data exchange with an external communication device (3), and at least one sensor device (12) for measuring (20) a change in capacitance,
**characterized in that**
exactly one voltage device (14) is used for the common voltage setting of the at least one communication device (11) and the at least one sensor device (12), wherein
the voltage device (14) has a voltage regulator and/or a voltage stabilizer for common voltage setting, or is configured as a voltage regulator and/or a voltage stabilizer, wherein
an at least partially simultaneous operation (21) at the time (t1) of the communication device (11) and of the sensor device (12) is detected by an evaluation and control device (13) by measurement, the measured value (20.3) of the sensor device (12) detected at the time (t1) then being identified as incorrect by the evaluation and control device (13).

9. Method (100) according to claim 8,
**characterized in that**
the control by the evaluation and control device (13) is configured in such a way that, faults caused by operation (21) of the communication device (11), in particular NFC device (11), in the measurement (20) of the sensor device (12) are prevented, in particular **in that** the evaluation and control device (13) detects and/or blocks a simultaneous operation of the communication device (11), in particular NFC device (11), and the sensor device (12).

10. Method (100) according to any one of the preceding method claims,
**characterized in that**
a measurement (20) of the sensor device (12) is cyclically initiated by an evaluation and control device (13) and a query of the communication device (11), in particular the NFC device (11), is carried out as a function of time of the measurement (20), in particular cyclically after a defined number of measurements (20).

11. Method (100) according to any one of the preceding method claims,
**characterized in that**
the communication device (11), in particular the NFC device (11), and the sensor device (12), in particular an evaluation and control device (13) of the sensor device (12), are operated by the voltage device (14) with a same electrical operating voltage (Ub) and/or are connected to a same electrical potential, in particular a voltage for operating a sensor unit (12.1) of the sensor device (12) being directly and/or exclusively dependent on this operating voltage (Ub), and/or
**in that** a query, in particular by query pulses (21.1), is carried out cyclically by the communication device (11), in particular by NFC device (11), in order thus to detect an external communication device (3) which is ready for communication, in particular in the vicinity of the door handle (2), such query of the communication device (11), in particular of the NFC device (11), always being detected by the evaluation and control device (13) by measurement.

12. Method (100) according to any one of the preceding method claims,
**characterized in that**
invalid measurements (20.3) in the measurement (20) of the sensor device (12) are avoided and/or reduced by the communication device (11), in particular NFC device (11), and the sensor device (12) being operated sequentially in time by the evaluation and control device (13).

13. Method (100) according to any one of the preceding method claims,
**characterized in that,**
when an external communication device (3) which is ready for communication is detected, the communication device (11), in particular an NFC device (11), sends an interruption request to the evaluation and control device (13) in order, to initiate in particular a data exchange, the evaluation and control device (13) interrupting the measurement detection of the sensor device (12), in particular during the data exchange.

14. Method (100) according to any one of the preceding method claims,
**characterized in that**
the evaluation and control device (13) performs the measurement detection of the sensor device (12) as a function of an output signal of the communication device (11), in particular NFC device (11), received by the evaluation and control device (13), and/or of an input signal transmitted to the communication device (11), in particular NFC device (11), by the evaluation and control device (13).

## Revendications

1. Dispositif (10) d'acquisition de données et de mesure pour une poignée de porte (2) d'un véhicule (1), comportant au moins un dispositif de communication (11), en particulier un dispositif NFC (11) d'échange de données NFC avec un dispositif de communication externe (3), et au moins un dispositif capteur (12) pour mesurer (20) une variation de capacité,
**caractérise en ce**
**qu'**il est prévu exactement un dispositif de tension (14) pour le réglage commun de tension d'au moins un dispositif de communication (11) et d'au moins un dispositif capteur (12),
le dispositif de tension (14), pour l'établissement d'une tension commune, comportant un régulateur de tension et/ou un stabilisateur de tension ou étant conçu comme régulateur de tension et/ou stabilisateur de tension, où
le dispositif (10) comporte un dispositif d'évaluation et de commande (13) qui est conçu pour détecter par mesure un fonctionnement au moins partiellement simultané (21) au moment (t1) du dispositif de communication (11) et du dispositif capteur (12), afin d'identifier ensuite la valeur mesurée (20.3) du dispositif capteur (12) détecté au moment (t1) par le dispositif d'évaluation et de commande (13) comme incorrect.

2. Dispositif (10) selon la revendication 1,
**caractérise en ce**
**que** le dispositif capteur (12) présente un dispositif d'évaluation et de commande (13) et au moins une unité capteur (12.1), en particulier un capteur capacitif (12.1), le dispositif d'évaluation et de commande (13) pouvant de préférence déclencher à la fois le dispositif de communication (11), en particulier le dispositif NFC (11), et la au moins une unité capteur (12.1).

3. Dispositif (10) selon la revendication 1 ou 2,
**caractérise en ce**
**que**, pour détecter des signaux d'entrée et/ou des signaux de sortie, l'appareil d'exploitation et de commande (13) est relié électriquement au dispositif de communication (11), en particulier au dispositif NFC (11), et/ou à au moins une unité de détection (12.1), et en ce que les perturbations dans la mesure (20) dues notamment au dispositif de communication (11), en particulier le dispositif NFC (11), peuvent être réduites par le dispositif de surveillance et de commande (13), les signaux d'entrée et/ou de sortie.

4. Dispositif (10) selon l'une des revendications précédentes,
**caractérise en ce**
**que** le réglage de tension du dispositif de communication (11), en particulier du dispositif NFC (11), et du dispositif capteur (12), en particulier d'un dispositif d'évaluation et de commande (13) et/ou d'une unité capteur (12.1) du dispositif capteur (12), peut être effectué directement par le dispositif tension (14), en particulier le dispositif d'évaluation et de commande (13) étant relié électriquement à l'unité capteur (12.1) pour alimenter l'unité capteur (12.1).

5. Dispositif (10) selon l'une des revendications précédentes,
**caractérise en ce**
**que** le dispositif de communication (11) est prévu sous la forme d'un dispositif NFC (11).

6. Dispositif (10) selon l'une des revendications précédentes,
**caractérise en ce**
**que** l'appareil d'exploitation et de commande (13) présente une liaison de données, en particulier une liaison SPI, avec l'appareil de communication (11), en particulier un appareil NFC (11), et/ou avec au moins une unité de détection (12.1) et/ou l'électronique du véhicule, des données pouvant être transmises pour activation et/ou évaluation, en particulier via la liaison de données, et/ou
en ce que des données de l'échange de données du dispositif de communication (11), en particulier du dispositif NFC (11), peuvent être reçues, exploitées et/ou transmises à l'électronique du véhicule qui peut être reliée au dispositif d'exploitation et de commande (13) par le dispositif d'exploitation et de commande (13), en particulier pour effectuer un contrôle d'identification, une unité interface (13.2) étant notamment prévue pour la liaison à l'électronique du véhicule.

7. Dispositif (10) selon l'une des revendications précédentes,
**caractérise en ce**
**qu'**il est prévu une unité de mémoire non volatile (13.1), l'unité de mémoire non volatile (13.1) comprenant des données, et en particulier des données contenant des informations sur les paramètres du véhicule, les données pouvant être transmises et/ou reçues par le dispositif de communication (11), notamment le dispositif NFC (11), et/ou
en ce qu'il est prévu une unité de commutation (13.5) pour commuter entre le fonctionnement d'au moins une unité de détection (12.1) du dispositif de détection (12) et le dispositif de communication (11), en particulier le dispositif NFC (11), afin de réduire les perturbations dans la mesure (20), l'unité de commutation (13.5) étant intégrée en particulier dans le dispositif de commande et d'exploitation (13).

8. Procédé (100) pour faire fonctionner un dispositif (10) d'acquisition de données et de mesure pour une poignée de porte (2) d'un véhicule (1), comprenant au moins un dispositif de communication (11), en particulier un dispositif NFC (11) pour échanger des données NFC avec un dispositif de communication externe (3), et au moins un dispositif capteur (12) pour mesurer (20) une variation de capacité,
**caractérise en ce**
**qu'**un seul dispositif de tension (14) est utilisé pour le réglage commun de la tension d'au moins un dispositif de communication (11) et du au moins un dispositif capteur (12), où
le dispositif de tension (14), pour l'établissement d'une tension commune, comportant un régulateur de tension et/ou un stabilisateur de tension ou étant conçu comme régulateur de tension et/ou stabilisateur de tension,
un fonctionnement au moins partiellement simultané (21) au moment (t1) du dispositif de communication (11) et du dispositif capteur (12) est détecté par un dispositif d'évaluation et de commande (13) utilisant une technique de mesure, la valeur mesurée (20.3) du dispositif capteur (12) détecté au moment (t1) étant alors identifiée comme erronée par le dispositif d'évaluation et de commande (13).

9. Procédé (100) selon la revendication 8,
**caractérise en ce**
**que** le dispositif d'exploitation et de commande (13) commande le dispositif capteur (12) de telle sorte que des défauts dans la mesure (20) du dispositif capteur (12) provoqués par le fonctionnement (21) du dispositif de communication (11), en particulier le dispositif NFC (11), sont empêchés, en particulier en ce que le dispositif d'exploitation et de commande (13) détecte et/ou empêche le fonctionnement simultané du dispositif communication (11), en particulier du dispositif NFC (11), et le dispositif capteur (12).

10. Procédé (100) selon l'une des revendications de procédé précédentes,
**caractérise en ce**
**qu'**une mesure (20) du dispositif capteur (12) est déclenchée cycliquement par un dispositif d'évaluation et de commande (13) et une interrogation du dispositif de communication (11), en particulier du dispositif NFC (11), est effectuée en fonction du temps de la mesure (20), en particulier cycliquement après un nombre défini de mesures (20).

11. Procédé (100) selon l'une des revendications de procédé précédentes,
**caractérise en ce**
**que** le dispositif de communication (11), en particulier le dispositif NFC (11), et le dispositif capteur (12), en particulier un dispositif d'évaluation et de commande (13) du dispositif capteur (12), sont actionnés par le dispositif de tension (14) avec une même tension de fonctionnement électrique (Ub) et/ou sont reliés à un même potentiel électrique, en particulier une tension pour faire fonctionner une unité capteur (12.1) du dispositif capteur (12) étant directement et/ou exclusivement fonction de cette tension de fonctionnement (Ub), et/ou
en ce qu'une interrogation, en particulier par des impulsions d'interrogation (21.1), est effectuée cycliquement par le dispositif de communication (11), en particulier par le dispositif NFC (11), afin de détecter ainsi un dispositif de communication externe (3) prêt à communiquer, en particulier à proximité de la poignée de porte (2), une telle interrogation du dispositif de communication (11), en particulier du dispositif NFC (11), étant toujours détectée par le dispositif de contrôle et de contrôle (13), en technique de mesure.

12. Procédé (100) selon l'une des revendications de procédé précédentes,
**caractérise en ce**
**que** des mesures non valables (20.3) dans la mesure (20) du dispositif capteur (12) sont évitées et/ou réduites par le dispositif de communication (11), en particulier le dispositif NFC (11), et le dispositif capteur (12) est exploité séquentiellement dans le temps par le dispositif de contrôle et de commande (13).

13. Procédé (100) selon l'une des revendications de procédé précédentes,
**caractérise en ce**
**que**, lorsqu'un dispositif de communication externe (3) prêt à communiquer est détecté, le dispositif de communication (11), en particulier un dispositif NFC (11), envoie une demande d'interruption au dispositif d'évaluation et de commande (13) afin, en particulier, de lancer un échange de données, le dispositif d'évaluation et de commande (13) interrompant la détection de mesure du dispositif capteur (12), en particulier durant l'échange de données.

14. Procédé (100) selon l'une des revendications de procédé précédentes,
**caractérise en ce**
**que** le dispositif d'évaluation et de commande (13) effectue la détection de mesure du dispositif capteur (12) en fonction d'un signal de sortie du dispositif de communication (11), en particulier du dispositif NFC (11), reçu par le dispositif d'évaluation et de commande (13), et/ou d'un signal d'entrée transmis au dispositif de communication (11), en particulier le dispositif NFC (11), par le dispositif d'évaluation et de commande (13).
